(19) Europäisches Patentamt

European Patent Office

Office européen des brevets

(11) EP 0 603 612 B1

(12) **EUROPÄISCHE PATENTSCHRIFT**

(45) Veröffentlichungstag und Bekanntmachung des Hinweises auf die Patenterteilung:
22.01.1997 Patentblatt 1997/04

(51) Int. Cl.6: **B60T 8/32**, B60T 8/24

(21) Anmeldenummer: 93119519.2

(22) Anmeldetag: 03.12.1993

(54) **Antiblockierregelsystem für Motorräder**

Anti-lock braking system for motor-bikes

Système de freinage anti-blocage pour motocyclettes

(84) Benannte Vertragsstaaten:
**DE FR GB IT**

(30) Priorität: **24.12.1992 DE 4244112**

(43) Veröffentlichungstag der Anmeldung:
**29.06.1994 Patentblatt 1994/26**

(73) Patentinhaber: **Bayerische Motoren Werke Aktiengesellschaft**
**80788 München (DE)**

(72) Erfinder:
• **Hauser, Berthold**
**D-83553 Frauenneuharting (DE)**
• **Ohm, Heinz Friedrich**
**D-64331 Weiterstadt (DE)**
• **Roll, Georg, Dr.**
**D-63150 Heusenstamm (DE)**

(56) Entgegenhaltungen:
EP-A- 0 370 469          WO-A-91/09759
DE-A- 4 204 350          GB-A- 2 234 303

**Beschreibung**

Die Erfindung betrifft ein Antiblockiersystem für Motorräder nach dem Oberbegriff des Anspruchs 1.

Da Motorräder bei Kurvenfahrt unbedingt eine hinreichende Seitenführungskraft benötigen, sind Kurvenbremsungen im Grenzbereich nahezu unmöglich, weil die in Längsrichtung aufgebrachten Bremskräfte zur deutlichen Verringerung der Seitenführungskräfte der Reifen führen. Besonders problematisch verlaufen natürlich geregelte Kurvenbremsungen, da jedes ABS-System durch zyklische Druckanfahrt immer wieder kurzzeitige Radüberbremsungszustände provoziert oder den Bremsdruck zumindest in die Nähe des Blockierdrucks fährt. In diesen kurzen Zeitphasen geht die Seitenführungskraft des überbremsten Rades stark gegen O, so daß ein in Schräglage befindliches Fahrzeug seitlich wegrutschen würde.

Außerdem treten durch die Bremskräfte in der Schräglage starke Aufstellmomente auf, die der Fahrer kompensieren muß, um die Schräglage zu erzwingen.

Selbst wenn die Seitenführungskräfte noch ausreichen sollten, würden die starken Druckmodulationen, die zum Ausregeln von Radüberbremsungszuständen erforderlich sind, dazu führen, daß der Fahrer große Lenkmomentänderungen abfangen muß, die unvermittelt zu Zeitpunkten auftreten, die nicht vorhersehbar sind, so daß das Fahrzeug leicht instabil wird.

Die praktisch eingesetzten Antiblockiersysteme schalten zyklisch zwischen den Regelungszuständen "Druckentlastung", "Druckhalten" und "Druckaufbau" an jedem Rad um.

Eine Druckentlastung findet üblicherweise immer dann statt, wenn das betreffende Rad einen maximal zulässigen Verzögerungswert bei hinreichend hohem Schlupf überschreitet. Diese Situation ist jeweils zu den Zeitpunkten TOein_i gegeben.

Ein Halten des Drucks (sofern systembedingt möglich) erfolgt dann, wenn das Rad aus der vorherigen Verzögerung in die Beschleunigungsphase übergeht, also wieder in Richtung stabiler Schlupfbereiche läuft (tritt auf zu den Zeitpunkten TOhalt_i). Ein erneuter Druckaufbau findet statt, wenn das Rad wieder eindeutig im stabilen Schlupf läuft (Zeitpunkte TOaus_i), wobei zumeist erst ein größerer Drucksprung und danach ein kontinuierlicher Druckaufbau mit konstantem Gradienten erfolgt (im folgenden "Druckaufbauphase" oder "Wiederbelastungsphase" genannt), bis ein dadurch erzwungener erneuter Radgeschwindigkeitseinbruch wieder eine Druckentlastungsphase einleitet.

Wenn nach diesem Verfahren ein Radgeschwindigkeitseinbruch erkannt wird, hat das Rad mit hoher Wahrscheinlichkeit bereits die Kuppe der $\mu$-Schlupfkurve überschritten, so daß der fahrbahnbedingte Radantrieb um so kleiner wird, je weiter das Rad in den instabilen Schlupf einbricht. Um die Radgeschwindigkeit nun wieder auszuregeln, ist eine Entlastung um einen relativ großen Druckbetrag notwendig, damit diesem Mitkopplungseffekt entgegengewirkt wird.

Der Fahrer muß während einer Kurvenbremsung mit starker Schräglage ein hohes Lenkmoment kompensieren, da sich der Radaufstandspunkt von der Reifenmitte in Richtung des kurveninneren Randes verschiebt. Die Stärke des Lenkmoments nimmt linear mit der Bremskraft zu. Wenn nun starke Druckmodulationen zu kurzzeitigen erheblichen Schwankungen des Lenkmomentverlaufs führen, ist der Fahrer i. a. nicht mehr in der Lage, immer ein entsprechendes Gegenmoment aufzubringen. Bei schlechter oder übermäßiger Lenkreaktion kann das Fahrzeug sehr leicht instabil werden.

In der P 42 04 350.6 wird ein Verfahren beschrieben, mit dessen Hilfe Radüberbremsungen vermieden oder zumindest zeitlich weit hinausgezögert werden können. Wenn es auf diese Weise gelingt, das Vorderrad tatsächlich permanent in Schlupfbereichen zu halten, die vor dem Reibwert-Maximum ($\mu$-Maximum) liegen, so bleibt das Fahrzeug auch bei einer Kurvenfahrt stabil, wobei nur geringe Lenkmomentänderungen auf den Fahrer wirken und gleichzeitig eine nahezu optimale Verzögerung erzielt wird. Das Verfahren weist jeoch den Nachteil auf, daß bei starker Schräglage zu geringe Reserven bezüglich der Seitenführungskraft existieren, da das Verzögerungsmaximum praktisch permanent ausgeschöpft wird. Schon bei einem geringfügigen Reibwertwechsel wie er lokal auch auf allen homogen erscheinenden Böden auftreten kann, ist letztlich doch eine kurzzeitige Radüberbremsung mit den o. g. negativen Begleiterscheinungen möglich.

Ein wesentliches Problem der kurvenangepaßten Blockierschutzregelung liegt in der sicheren Erkennung der Kurvenfahrt und einer hinreichend genauen Ausmessung des Schräglagewinkels. Die in der DE 38 39 520 beschriebenen Verfahren beziehen sich auf die Ausmessung der dynamischen Radaufstandskräfte, die sich gegenüber den statisch gemessenen Werten bei wachsender Schräglage erhöhen. Ferner werden Kippmomente des in Schräglage laufenden Rades ausgewertet, um den Grad der Schräglage zu messen, wobei die Kippmomente durch unterschiedliche Radaufstandskräfte an der linken und rechten Radseite bestimmt werden. Um die Erkennung der Schräglagenfahrt zusätzlich abzusichern, wird ein bestimmtes zeitliches Lenkwinkelmuster herangezogen.

Die beschriebenen Verfahren sind aber einerseits mit hohem meßtechnischen Aufwand verbunden und liefern zum anderen auch nicht immer eindeutige Ergebnisse.

So erfordert beispielsweise die Messung der Kippmomente zwei Kraftmeßlager. Außerdem hängen die Radkippmomente nicht nur vom Grad der Schräglage sondern auch vom Typ und Zustand der Reifen ab. Weiterhin ist die Unsicherheit bei der Lenkwinkel-Mustererkennung sehr groß, da die Muster in Abhängigkeit der Fahrzeuggeschwindigkeit und des Fahrerverhaltens stark schwanken. Aufgrund der ausgeprägten Profile speziell bei Breitreifen gibt es keinen eindeutigen Zusammenhang zwischen dem eingeschlagenen Lenkwinkel und der bestehenden Schräglage des Fahrzeugs.

In der DE-OS 38 39 520 wird als Reaktion auf eine erkannte Kurvenfahrt ein Schwellwert für die Aktivierung der Blockierschutzregelung verändert mit dem Ziel, schon bei geringen Radschlupfwerten in die Druckreduzierungsphase zu gehen.

Eine derartige Maßnahme kann jedoch in vielen kritischen Situationen nicht ausreichen, um eine hinreichende Seitenführungsstabilität zu gewährleisten. Bei extremer Kurvenfahrt muß speziell der Vorderradbremsdruck weit unter dem Blockierwert gehalten werden, damit das Fahrzeug nicht seitlich wegrutscht. Schlupfwerte, die eindeutig auf eine Überbremsung hindeuten, können bereits zu geringe Seitenführungskräfte zur Folge haben.

Es ist deshalb Aufgabe der Erfindung, ein Antiblockierregelsystem für Motorräder darzustellen, mit dem nach eindeutig erkannter Kurvenfahrt eine modifizierte Blockierschutzregelung aktiviert wird, die sich dynamisch an den Grad der erreichten Schräglage anpaßt.

Die Lösung erfolgt mit den im kennzeichnenden Teil des Anspruchs 1 angegebenen Merkmalen. Vorteilhafte Weiterbildungen sind in den Ansprüchen 2 bis 14 angegeben.

Erfindungsgemäß wird vorgeschlagen, die Kurvenfahrt und den Grad der Schräglage durch zwei Beschleunigungssensoren zu erfassen. Diese sind heute als direkt auf der ABS-Elektronik einzusetzende Halbleiterkomponenten verfügbar und verursachen - bezogen auf den Gesamtaufwand des Antiblockiersystems - nur geringe Kosten. Schwerpunkt der Erfindung ist aber nicht in erster Linie die Erkennung der Schräglage sondern die Reaktion auf die erkannte Situation.

Das erfindungsgemäße Verfahren zur Fahrzeugstabilisierung sieht daher umfassende Maßnahmen vor, bei erkannter Fahrzeugschräglage die gesamte Blockierschutzstrategie außerhalb und innerhalb von geregelten Bremsungen an den Grad der Schräglage anzupassen.

Entscheidend für eine sichere Bremsdrucksteuerung ist die Einstiegphase. Wenn das Vorderrad bei bereits bestehender Schräglage überbremst wird, ist es wichtig, daß das ABS nicht erst über eine erkannte Radblockiertendenz aktiv geschaltet wird, da dann zumindest für eine kurze Zeit nur sehr geringe Seitenführungskräfte auftreten, die schon zum Sturz führen können. Es muß daher schon vor dem Auftreten erster Blockiertendenzen dafür gesorgt werden, daß der Radbremszylinderdruck am Vorderrad bestimmte Maximalwerte nicht überschreitet, die abhängig vom Grad der erkannten Schräglage berechnet werden müssen.

Die während der aktiven Blockierschutz-Regelung verfolgte Strategie zur Fahrzeugstabilisierung basiert auf der P 42 15 350.6, in der vorgeschlagen wird, den Radbremsdruck in den Wiederbelastungsphasen exponentiell auf den jeweils zuvor gespeicherten Radblockierdruck POein zu erhöhen, wobei der Druck zu Beginn einer Wiederbelastung zuerst steil und dann immer flacher gegen den zu erwartenden Blockierdruck POein gefahren wird. Die flache Druckanfahrt in der Nähe von POein verhindert, daß das Rad mit hoher Dynamik in den instabilen Schlupfbereich gebremst wird. Durch eine am Ende der Wiederbelastungsphase geforderte Druckminimalerhöhung wird POein mit Sicherheit wieder nach einer vorgegebenen Maximalzeit erreicht.

Die erfindungsgemäße Kurvendrucksteuerung sieht vor, den Druck in der Wiederbelastungsphase auch exponentiell gemäß der P 42 15 350.6 zu verfahren, jedoch vor Erreichen des vorherigen Blockierdrucks POein die Druckanfahrt anzuhalten und den Druck konstant zu halten. Die Differenz des Haltedrucks POstop zum Blockierdruck POein ist dabei abhängig von der Bremssituation. Je größer die erreichte Fahrzeugschräglage ist, desto größer wird man auch die Druckdifferenz wählen, so daß mit wachsender Schräglage eine ansteigende Seitenführungskraftreserve gewährleistet ist.

Bei der Kurvendrucksteuerung handelt es sich also - im Gegensatz zu den Mechanismen in der DE 38 39 520 um eine weit vorausschauende Komponente, die sich sehr flexibel auf die bestehenden Boden- und Lenkverhältnisse einstellt und dem kurvengebremsten Fahrzeug eine hinreichende Fahrstabilität bei sehr guter Regelruhe verleiht.

Die Vorteile der Erfindung sind also:

- Eindeutige Erkennung einer Fahrzeugschräglage
- Verhinderung von Radüberbremsungszuständen
- Sicherstellung einer ausreichenden Fahrzeugverzögerung
- Schnelle Druckanpassung bei wechselnden Situationen

Die Erfindung soll an einem Ausführungsbeispiel erläutert werden.
Es zeigt:

Figur 1    Funktionsbild des Antiblockiersystems

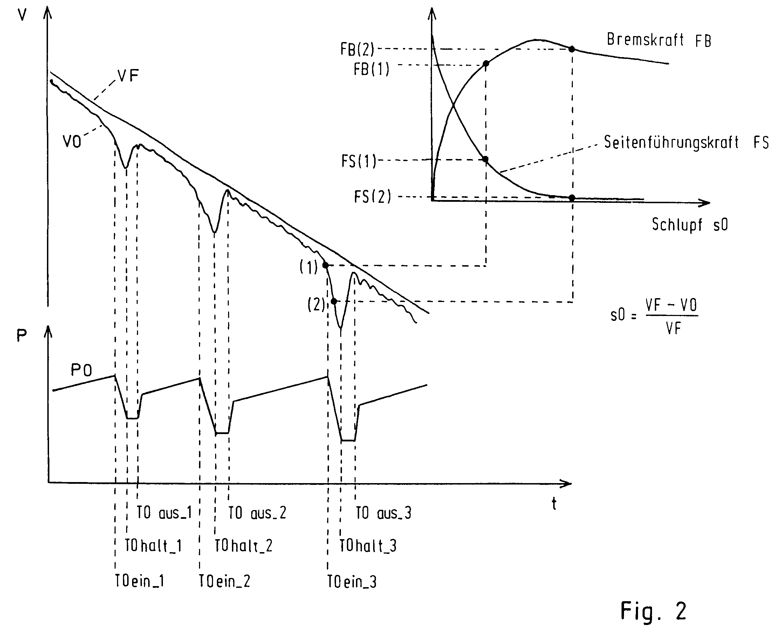

Figur 2    Zeitdiagramm einer normalen Regelbremsung (mit Bremskraft und Seitenführungskraft als Funktionen des Radschlupfes)

Figur 3     Kräfte am einspurigen Fahrzeug und Anbringung von Beschleunigungssensoren

Figur 3a     Um 45° verdreht angebrachte Beschleunigungssensoren

Figur 4     Prinzipeller Aufbau eines Druckmodulators nach dem Plungen-Prinzip

Figur 5     Zeitdiagramm einer Bremsung, bei der die Kurvendrucksteuerung eine aktive Druckbeschränkung am Vorderrad bewirkt.

Figur 5a     Funktionen Pab = f1 ($\Phi$) mit Korrektur-Kurvenschar

Figur 5b     Funktion AREFmin = f3 ($\Phi$)

Figur 6     Zeitdiagramm einer Regelbremsung mit aktiver Kurvendrucksteuerung

Figur 6a     Funktion PDelta = f2 ($\Phi$)

Figur 7     Schaltungstechnische Realisierung der Kurvendrucksteuerung

Figur 7a     Schaltungstechnische Realisierung der Funktion Pab = f1 ($\Phi$)

Figur 7b     Schaltungstechnische Realisierung der Funktion PDelta = f2 ($\Phi$)

Figur 7c     Schaltungstechnische Realisierung der Funktion AREFmin = f3 ($\Phi$)

Dabei bedeuten:

SO     = Signal vom induktiven Vorderradsensor, das eine Bestimmung der aktuellen Vorderrad-Umfangsgeschwindigkeit ermöglicht)

S1     = Signal vom induktiven Hinterradsensor, das eine Bestimmung der aktuellen Hinterrad-Umfangsgeschwindigkeit ermöglicht)

VO     = Vorderrad-Momentangeschwindigkeit (aus den Radsensorsignalen bildet ein ABS-Regler in jedem Regelungszyklus die momentane Radumfangsgeschwindigkeit)

V1     = Hinterrad-Momentangeschwindigkeit

VF     = reale Fahrzeuggeschwindigkeit (dem ABS und der Kurvendrucksteuerung nicht bekannt)

PHBZO     = Hauptbremszylinderdruck des Vorderradkanals

PHBZ1     = Hauptbremszylinderdruck des Hinterradkanals

PO     = Radbremszylinderdruck am Vorderrad (dieser Druck wird bei der Regelbremsung vom ABS-Regler eingestellt; die hier vorgestellten Mechanismen können indirekt über den ABS-Regler Einfluß auf PO nehmen)

P1     = Radbremszylinderdruck am Hinterrad

POstop     Maximal zulässiger Vorderraddruck bei Kurvenfahrt während der aktiven ABS-Regelung

G     = Gewichtskraft des Fahrzeugs (einschließlich Fahrer und Beladung)

FZ     = Zentrifugalkraft, die bei der Kurvenfahrt auf das Fahrzeug wirkt (einschließlich Fahrer und Beladung)

FR     = aus G und FZ resultierende Gesamtkraft

Pab     = POmax = bei Kurvenfahrt maximal tolerierter Vorderradbremsdruck außerhalb der aktiven ABS-Regelung

MF     = Motorzugkraft, die im Falle eines Plunger-Druckmodulators auf den Tauchkolben wirkt

FF     = Rückstell-Federkraft beim Plunger-Druckmodulator

PF     = Kraft, die aufgrund des RBZ-Drucks auf den Tauchkolben des Druckmodulators wirkt

z     = Stellung des Tauchkolbens

MFab     = Motorzugkraft MF, die zum Abtrennen des Radbremszylinders (RBZ) vom Hauptbremsyzlinder (HBZ) führt und damit Pab im RBZ einschließt

| | |
|---|---|
| VREF | = berechnete Fahrzeugreferenzgeschwindigkeit (wird aus gefilterten Radgeschwindigkeiten und Plausibilitätsüberlegung gebildet) |
| AREF | = gefiltere Fahrzeugverzögerung (zeitliche Ableitung von VREF, die aufgrund der kurzen Regelungszykluszeiten allerdings sehr stark schwankt. Aus diesem Grund erfolgt allgemein eine Filterung dieses Signals. AREF wird als eine derartige gefilterte Fahrzeugverzögerung angenommen) |
| ABSO | = Anzeigesignal für eine aktive ABS-Regelung am Vorderrad (boolesches 1-bit-Signal, das auf logisch '1' liegt, wenn das Vorderrad aktiv regelgebremst wird) |
| ABS1 | = Anzeigesignal für eine aktive ABS-Reglung am Hinterrad (boolesches 1-bit-Signal, das auf logisch '1' liegt, wenn das Hinterrad aktiv regelgebremst wird) |
| REO | = Anzeigesignal für eine Vorderradüberbremsung (boolesches 1-bit-Signal, das auf logisch '1' liegt, wenn am Vorderrad ein instabiler Schlupf vorliegt) |
| $\Phi$ | = Schräglagewinkel des Fahrzeugs |
| $\Phi\_krit$ | = Grenzwert des Schräglagewinkels, bei dessen Überschreitung die Kurvendrucksteuerung aktiv geschaltet wird |
| $\Phi\_ext$ | = Extremer Schräglagewinkel (dient der Bildung von Begrenzungsfunktionen) |
| a | = bei Kurvenfahrt wirkende Zentrifugalbeschleunigung |
| aV | = von einem vertikal am Fahrzeug angebrachten Beschleunigungssensor erfaßter Anteil von a |
| aH | = von einem horizontal am Fahrzeug angebrachten Beschleunigungssensor erfaßter Anteil von a |
| aV_tpf | = tiefpaßgefiltertes aV |
| aH_tpf | = tiefpaßgefiltertes aH |
| Regelungszyklustakt | = Taktsignal, das mit der Zeitdauer eines ABS-Regelungszyklus (hier 8ms) geschaltet wird ==> 125 Hz |
| $\mu$ | = Reibbeiwert zwischen Reifen und Fahrbahn |
| TOein | = Zeitpunkt, zu dem eine überbremsungsbedingte Blockierneigung am Vorderrad auftritt |
| TOein_i | = Zeitpunkt, zu dem innerhalb einer Regelbremsung zum i-tenmal eine Blockierneigung am Vorderrad auftritt |
| TOhalt | = Zeitpunkt, zu dem das Vorderrad nach Ausregelung einer Überbremsung wieder beschleunigt |
| TOhalt_i | = Zeitpunkt, zu dem das Vorderrad nach der i-ten Überbremsung innerhalb einer Regelbremsung wieder beschleunigt |
| TOaus | = Zeitpunkt, zu dem eine Blockierneigung am Vorderrad durch das ABS ausgeregelt worden ist |
| TOaus_i | = Zeitpunkt, zu dem innerhalb einer Regelbremsung zum i-tenmal eine Blockierneigung am Vorderrad ausgeregelt worden ist |
| T | = Zeitintervall für die Korrektur der Funktionen Pab = f1 ($\Phi$) und PDelta = f2 ($\Phi$) |
| Tab | = Zeitpunkt, zu dem der RBZ vom HBZ abgetrennt wird |
| TOstop | = Zeitpunkt, zu dem die Kurvendrucksteuerung den ABS-Regler veranlaßt, den Druckaufbau in der Wiederbelastungsphase zu stoppen |
| PDelta | = Druckdifferenz, um die der Radblockierdruck in der Wiederbelastungsphase unterschritten werden muß |
| BOstop | = Steuersignal an den ABS-Regler: bewirkt Halten des aktuellen Bremsdrucks |
| KDSakt | = Anzeigesignal für den Eingriff der Kurvendrucksteuerung |
| AREFmin | = minimale Fahrzeugverzögerung, bei deren Unterschreitung eine Korrektur der Kennlinien Pab = f1 ($\Phi$) bwz. PDelta = f2 ($\Phi$) erfolgt |
| AREFmax | = maximale Fahrzeugverzögerung, bei deren Überschreitung eine Korrektur der Kennlinie PDelta = f2 ($\Phi$) erfolgt |
| K1, K2, K3, K4, K5, K6, K7, K8 | = Konstanten für die Funktionsbildung der Kurvensteuerung |
| TCNT | = Zählerwert zum Einstellen des Korrekturintervalls T |
| DPO | = Betrag, um den der ABS-Regler den Vorderraddruck reduziert, wenn das Signal BOstop gesetzt ist |
| KVOin | = Anzeigesignal, das der ABS-Regler setzt, wenn das Ventil zwischen HBZ und RBZ am Vorderradkanal geöffnet ist. |
| 1g | = Erdbeschleunigung = 9.81 m/s**2 |

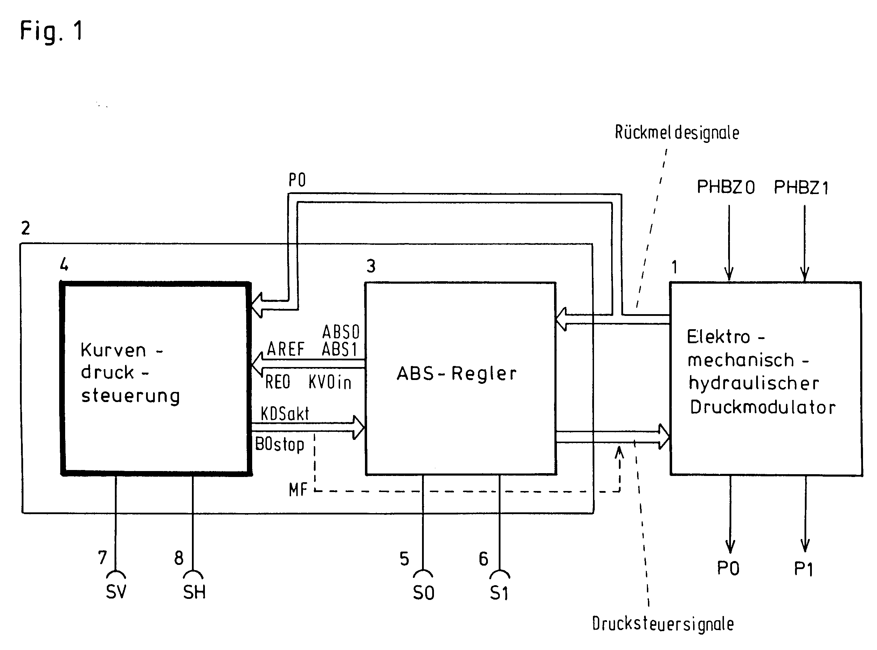

Figur 1 zeigt ein Blockierschaltbild eines Antiblockiersystems, bestehend aus einem elektro-mechanisch-hydraulischen Druckmodulator (1) und einer elektronischen Steuereinheit (2), die neben den Komponenten für den ABS-Regler (3) noch eine Hilfsschaltung (4) beinhaltet, die die o. g. Strategie für die Kurvenregelung ausführt und daher als "Kurvendrucksteuerung" bezeichnet wird.

Die Funktionsblöcke (3, 4) können sowohl durch Spezial-Hardware als auch durch eine softwarenmäßige Implementierung realisiert werden.

Um die Einbindung der Kurvendrucksteuerung in ein normales Antiblockiersystem darzustellen, werden nachfolgend kurz die funktionalen Zusammenhänge der Blöcke (1,3,4) beschrieben. Der ABS-Regler (3) bekommt von den Radsensoren (5,6) Impulsfolgen SO und S1, aus deren Frequenzen er direkt die realen Umfangsgeschwindigkeiten VO und V1 der beiden Fahrzeugräder berechnet. Aus VO und V1 ermittelt der ABS-Regler (3) weitere interne Referenzgrößen, wie beispielsweise die Fahrzeug-Referenzgeschwindigkeit VREF und die Fahrzeug-Referenzverzögerung AREF, damit er Überbremsungszustände erkennen und sicher ausregeln kann. Im Eintrittsfall gibt der ABS-Regler (3) Drucksteuersignale an den Druckmodulator (1), so daß dieser die vom Fahrer vorgegebenen Hauptbremszylinderdrücke PHBZO und PHBZ1 reduziert und als Radbremszylinderdrücke PO und P1 zu den Radbremskreisen weiterleitet.

Der hier zugrundegelegte Druckmodulator gibt Rückmeldesignale an den ABS-Regler; es handelt sich dabei um Information über die eingestellten Bremsdrücke PO und P1, also im Falle eines Plunger-Druckmodulators (s. auch DE-OS 35 30 280) um die druckbestimmenden Positionen der Tauchkolben. Die internen Referenzsignale können von der Kurvendrucksteuerung (4) mitgenutzt werden.

Der ABS-Regler arbeitet nun nach bekannten Grundstrategien die Blockierschutzregelung ab. Parallel dazu berechnet die Kurvendrucksteuerung (4) bei eindeutig erkannter Kurvenfahrt optimale Druckpunkte für das Vorderrad und übergibt an den ABS-Regler entsprechende Steuersignal, so daß dieser seine Grundregelstrategie unterbricht und versucht, die von der Kurvendrucksteuerung vorgegebenen Vorderraddruckpunkte einzustellen. ABS-Regler und Kurvendrucksteuerung arbeiten also parallel. Die Grundfunktionen des ABS-Reglers werden hier als bekannt vorausgesetzt und nicht näher beschrieben. Gegenstand dieser Anmeldung sind lediglich die Funktionen der Kurvendrucksteuerung (4).

In einer praktischen Realisierung können der ABS-Regler (3) und die Kurvendrucksteuerung (4) als eine Komponente angesehen werden. Eine logische Auftrennung erfolgt hier nur mit dem Ziel, die innovativen Funktionen der Kurvendrucksteuerung hervorzuheben.

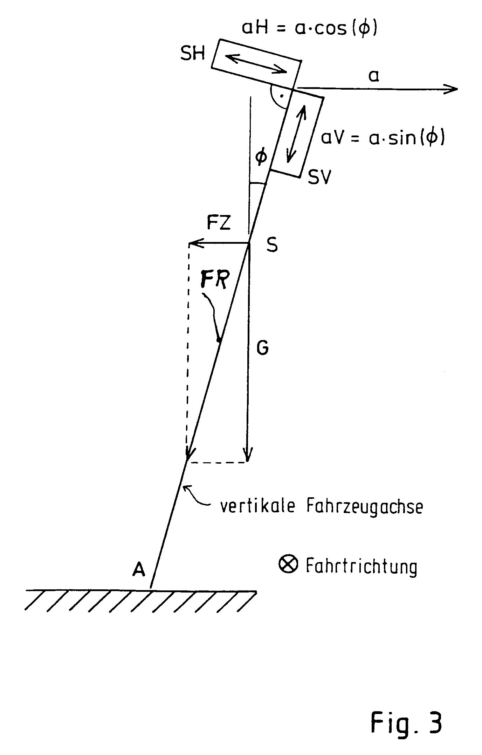

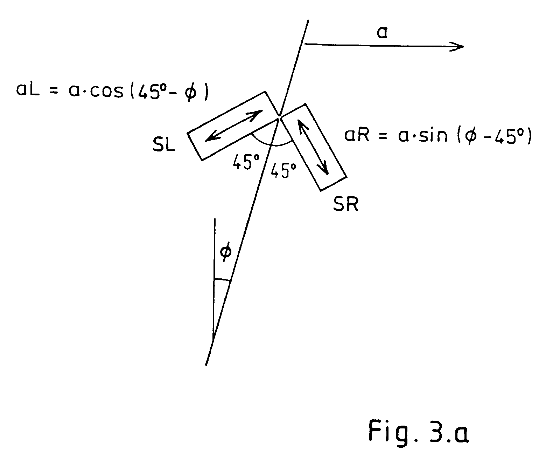

Wenn ein einspuriges Fahrzeug eine Kurvenfahrt ausführt (s. Figur 3), muß die nach außen wirkende Zentrifugalkraft FZ mit Hilfe einer entsprechenden Schräglage durch die Gewichtskraft G so kompensiert werden, daß die Kraftresultierende FR auf der Verbindungslinie zwischen dem Fahrzeugschwerpunkt (S) und dem Radaufstandspunkt (A) liegt. Werden an dem Fahrzeug zwei Bechleunigungssensoren (SH) und (SV) gemäß Figur 3 so angebracht, daß Sensor (SH) die horizontale und Sensor (SV) die vertikale Beschleunigung des Fahrzeugs mißt, so kann man aus den beiden Sensorwerten aV und aH eindeutig den Schräglagewinkel $\Phi$ berechnen.

$$aV = a * \sin (\Phi)$$

$$aH = a * \cos (\Phi)$$

$$\Phi = \arctan (aV / aH)$$

Die eindeutige Kurvenerkennung ist Grundvoraussetzung für eine problemlose Überlagerung von normaler Blockierschutzregelung und Kurvendrucksteuerung. Da die Kurvendrucksteuerung erheblich in die Wirkungsweise der Blockierschutzregelung eingreift und i. a. zu verminderten Vorderradbremsdrücken führt, die unter den Radblockierdrücken liegen, darf eine Kurvendrucksteuerung nur dann aktiviert werden, wenn mit Sicherheit eine Kurvenfahrt vorliegt. Es muß daher vermieden werden, eine Kurvenfahrt aufgrund von Störeinflüssen fälschlicherweise zu erkennen. Folgende Störeinflüsse können eine Kurvenfahrt vortäuschen:

- Starke Bodenunebenheiten, die Kraftstöße auf das Fahrzeug ausüben und daher kurzzeitig Beschleunigungen bewirken
- Fahrzeugvibrationen
- Normale Anbrems- und Beschleunigungsvorgänge bei Geradeausfahrt

Um die hochfrequenten Störungen aufgrund von Bodenunebenheiten und Fahrzeugvibrationen zu unterdrücken, genügt eine einfache Tiefpaßfilterung der beiden Sensorsignale:

$$\Phi = \arctan (aV\_tpf / aH\_tpf)$$

mit

aV_tpf = tiefpaßgefiltertes aV

aH_tpf = tiefpaßgefiltertes aH

Da die Sensoren nur Beschleunigungen senkrecht zur Fahrtrichtung erfassen, wirken sich die statischen Beschleunigungs- und Bremsvorgänge des Fahrzeugs nicht aus; es werden jedoch Fahrzeugnickbewegungen speziell bei hartem Anbremsen und starken Beschleunigungsänderungen vom vertikalen Sensor (SV) registriert. Da der horizontale Sensor (SH) in diesen Fällen aber keinen Wert liefert und die o. g. Filterung die abrupt auftretenden Wertänderungen von (SV) ohnehin unterdrückt, wird dann nicht fehlerhaft auf Kurvenfahrt erkannt, wenn man als zusätzliche Bedingung für die Gültigkeit des berechneten Schräglagewinkels die Forderung aufstellt:

$$aH\_tpf > aV\_tpf /2$$

Damit eliminiert man alle Störeinflüsse, die aufgrund von niederfrequenten Ein- und Ausfederungsvorgängen gegeben sind. Gleichzeitig erfaßt man aber alle Schräglagewinkel im relevanten Bereich von 0° bis etwa 63°.

Eine andere Möglichkeit besteht darin, die Sensoren gemäß Figur 3a um 45° geneigt anzubringen. In diesem Fall deuten Differenzen der Werte aL (vom linken Sensor (SL)) und aR (vom rechten Sensor (SR)) auf eine Schräglage hin. Gleichphasige Signalanteile in aL und aR, die auf eine normale Beschleunigungs- oder Verzögerungsänderung des Fahrzeugs oder auf das Befahren von Bergkuppen oder Mulden zurückzuführen sind, werden durch Differenzbildung der gefilterten Sensorwerte eliminiert:

$$\text{falls } |\, aL\_tpf - aR\_tpf \,| < \text{Schwellwert} ==> \text{keine Kurvenfahrt}$$

Falls der Schwellwert überschritten wird, errechnet man den Schräglagewinkel nach folgenden Gleichungen (s. Figur 3a):

$$aL = a * \cos(45° - \Phi) = a * \cos(\Phi - 45°)$$

$$aR = a * \sin(\Phi - 45°)$$

Durch Tiefpaßfilterung von aL und aR unterdrückt man hochfrequente Störungen, und es ergibt sich das erwartete Ergebnis:

$$\Phi = \arctan(aR\_tpf / aL\_tpf) + 45°$$

Bei scharfem Anbremsen in Schräglage besteht die Gefahr, daß das Fahrzeug schon seitlich wegrutscht, bevor ein normales Antiblockiersystem eine nennenswerte Blockiertendenz am Vorderrad feststellt. Der druckreduzierte Eingriff würde also zu spät erfolgen.

Es muß daher schon vor dem eigentlichen Blockiervorgang eine Druckreduzierung am Vorderrad einsetzen, damit das Rad noch eine ausreichende Seitenführungskraft aufbringen kann. Nach den bekannten Mechansimen der Radblockiererkennung kann dieser Eingriff jedoch nicht erfolgen.

Auch eine Reduzierung der Radverzögerungsschwellen, bei denen eine Blockiertendenz als erkannt gilt, ist in vielen Fällen nicht ausreichend, da der Fahrer durch spontanes hartes Anbremsen kurzzeitig einen großen Drucküberschuß in den Radbremszylinder einspeisen und damit eine extreme Radumfangsverzögerung erzielen kann. Die Schwellenüberschreitung ist dann in jedem Fall sofort erfüllt, so daß das ABS auch ohne Schwellenreduzierung aktiv wird. Bevor das ABS dann aber den Druck so moduliert, daß das Rad wieder in stabile Schlupfbereiche einläuft, kann das Fahrzeug schon weggerutscht sein. Außerdem muß der Fahrer durch den starken Eingriff des Blockierschutzes hohe Lenkmomentänderungen kompensieren, die zu Instabilitäten führen können.

Es wird deshalb hier ein Verfahren vorgestellt, bei dem während einer erkannten Kurvenfahrt je nach erreichtem Schräglagegrad ein maximaler Vorderraddruck POmax nicht überschritten wird. Mit wachsendem Schräglagewinkel $\Phi$ wird dieser maximal erlaubte Vorderradbremsdruck (im folgenden als Abregeldruck Pab bezeichnet) nach einer bestimmten Funktion verringert:

$$Pab = POmax = f1(\Phi)$$

Wichtig für die kontinuierliche Stabilität des Fahrzeugs ist die strikte Vermeidung von Vorderradbremsdrücken oberhalb von POmax. Ein Antiblockiersystem mit schneller Druckmeßtechnik und kurzen Ventilschließzeiten (1μs-Bereich) könnte die Aufgabe der Druckbegrenzung mit hinreichender Qualität erfüllen. Jedoch müßte man den zusätzlichen Aufwand teurer Meßtechnik in Kauf nehmen.

Hier wird deshalb ein Blockierschutzsystem vorgestellt, das den Vorderradbremsdruck ohne Meßaufwand sofort mechanisch auf einen einstellbaren Maximalwert begrenzt.

Bei Antiblockiersystemen, die auf der Basis des Plunger-Prinzips arbeiten, können die Radbremsdrücke über eine Positionsregelung ihrer Tauchkolben eingestellt werden. Wenn die Position des Tauchkolbens durch eine Wegemeßeinrichtung (beispielsweise gemäß DE-OS 35 30 280) bestimmt wird, stehen dem ABS-Regler ständig Informationen über den erreichten Relativdruck zur Verfügung.

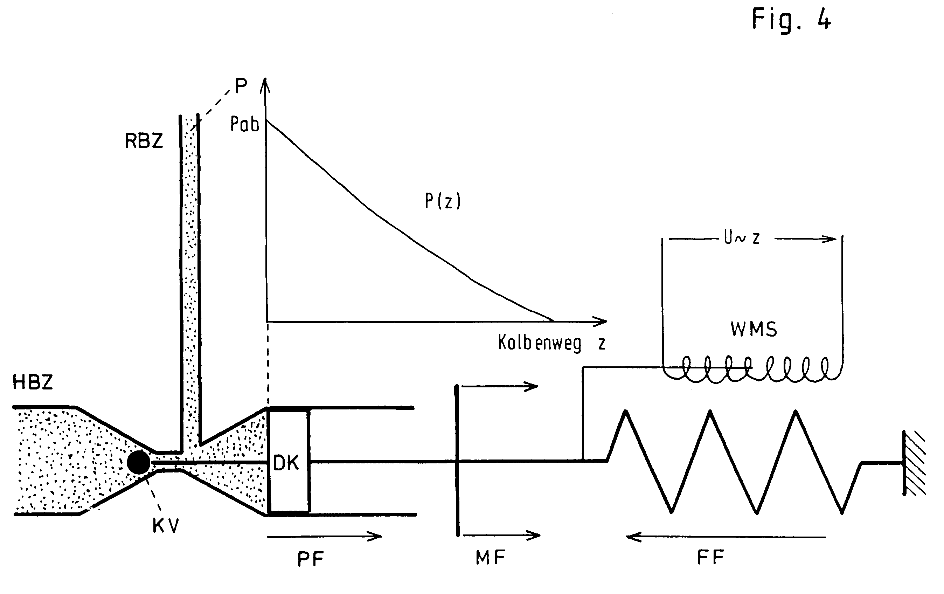

Figur 4 zeigt das Arbeitsprinzip für ein Fahrzeugrad. Während einer normalen Bremsung gelangt der vom Fahrer aufgebrachte Druck des Hauptbremszylinders (HBZ) direkt in den Radzylinderbremskreis (RBZ). Im Falle einer erkannten Überbremsung steuert der ABS-Regler eine Motorzugkraft MF, so daß der Druckkolben (DK) über einen Hebel gegen die Kraft FF einer Druckfeder und unter Mithilfe der Innendruckkraft PF auf den Kolben in Richtung steigender Kolbenwege z verschoben wird.

Schon bei einer geringen Kolbenverschiebung schließt sich das Kugelventil (KV), so daß der Radbremszylinderdruck vom Hauptbremszylinderdruck entkoppelt ist und der Druck Pab im Radbremskreis eingeschlossen wird.

Je weiter nun der Kolben in Richtung des Weges z verschoben wird, um so stärker wird der Druck wegen der im Bremssystem vorhandenen Elastizitäten reduziert. Beginnend mit dem eingeschlossenen Druck Pab, wird über den Weg z eine gegen O abnehmende Druckfunktion durchfahren, die je nach Bremssystem linear bis leicht degressiv verläuft.

Ein erneuter Druckaufbau wird durch Verschieben des Kolbens in Richtung kleinerer z-Werte erreicht, indem die Motorzugkraft MF so verringert wird, daß die Druckkraft FF der Feder wieder die Summe der aktiven Gegenkräfte PF und MF sowie der passiven Reibungskräfte des Systems übersteigt. Eine erreichte Wegstellung repräsentiert über die angegebene Druck-Weg-Funktion also direkt einen Bremsdruck relativ zu dem eingeschlossenen Druck Pab. Solange das Kugelventil (KV) geschlossen bleibt, existiert ein eindeutiger Zusammenhang zwischen Kolbenweg z und Bremsdruck P.

Gemäß Figur 4 gibt es ebenfalls einen eindeutigen Zusammenhang zwischen einer eingestellten Motorzugkraft MF und der Druckkraft PF, für die das Kugelventil (KV) schließt:

$$PF = FF = MF$$

Weiterhin ist der Zusammenhang zwischen dieser Druckkraft PF und dem eingeschlossenen Druck Pab über die Geometrie des Druckkolbens bekannt:

$$Pab = PF / A \qquad A = \text{Kolben-Querschnittsfläche}$$

Wenn nun ein bestimmter Radbremszylinderdruck nicht überschritten werden darf, so stellt man eine entsprechende Motorzugkraft ein, für die der gewünschte Abregeldruck gilt:

$$MFab = FF = A * Pab$$

Wenn bei erkannter Kurvenfahrt - auch ohne Vorliegen von Radblockiertendenzen - nun durch Vorbestromung eine Motorzugkraft MFab eingestellt wird, ist eindeutig sichergestellt, daß auch bei ruckartigem Betätigen der Bremse kein höherer Radbremszylinderdruck als Pab in den RBZ eingespeist werden kann.

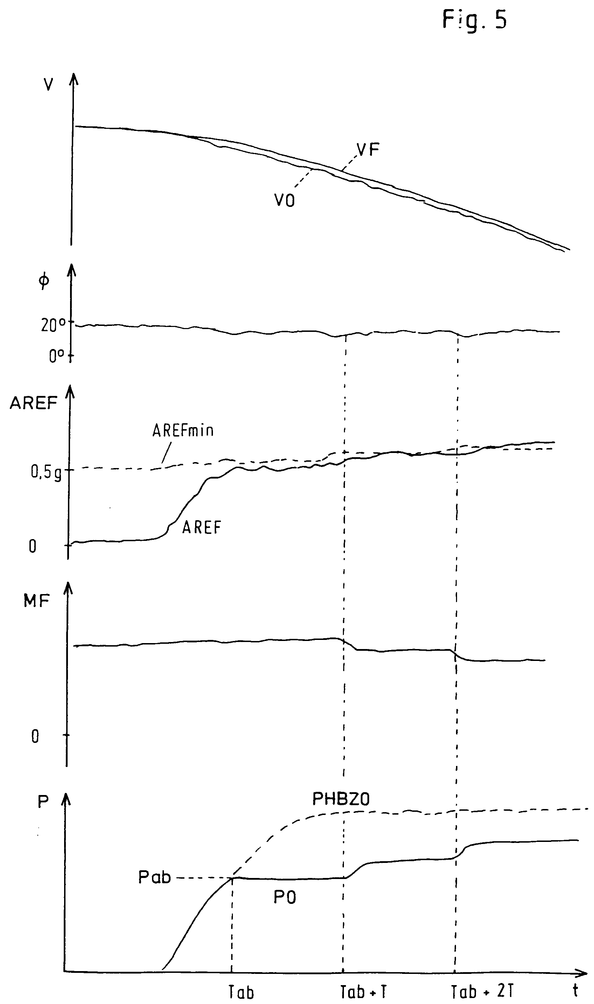

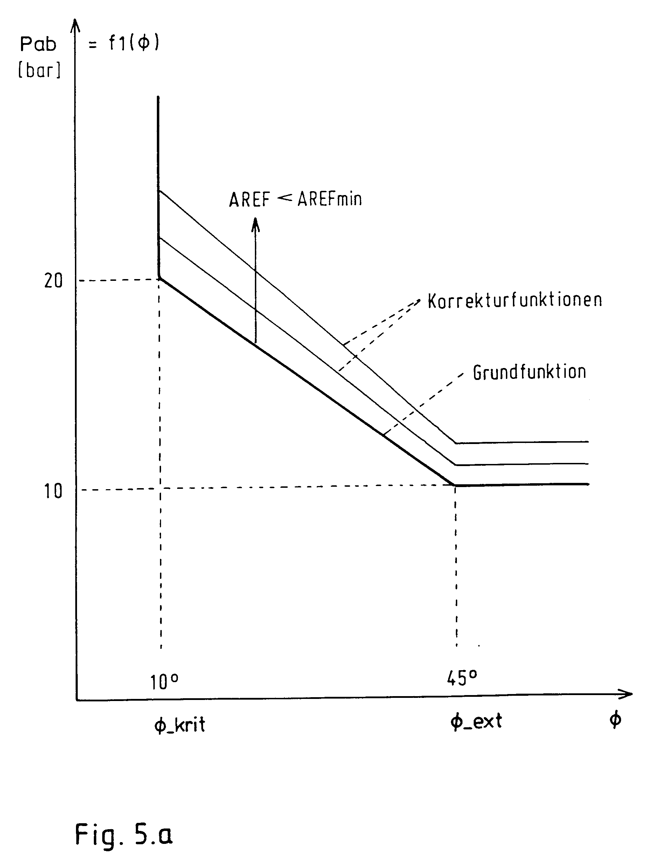

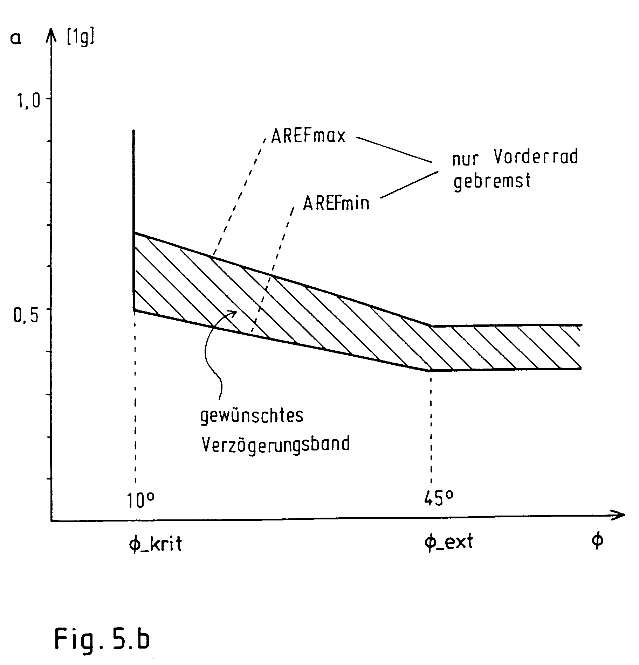

Figur 5 zeigt den zeitlichen Verlauf einer abrupten Anbremsung während einer Kurvenfahrt. Der vom Fahrer in den HBZ eingespeiste Vorderradbremsdruck PHBZO wird zunächst unbeschränkt zum RBZ geführt. Da die Kurvendrucksteuerung bereits eine deutliche Schräglage des Fahrzeugs registriert hat, erfolgt bei Überschreitung des Wertes Pab zum Zeitpunkt Tab eine Abtrennung des RBZ vom HBZ, so daß PO zunächst auf dem konstanten Wert Pab gehalten wird.

Das Vorderradgeschwindigkeitssignal VO zeigt zum Zeitpunkt Tab noch keinerlei Blockiertendenzen. Die Aktivierung des ABS und die Vorderraddruckbeschränkung erfolgen hier also allein aufgrund der erkannten Kurvensituation.

Figur 5a zeigt den maximal zugelassenen Abregeldruck Pab als Funktion f1 des Schräglagewinkels $\Phi$. Die Druck-Absolutwerte müssen natürlich an den Bremsentyp des betrachteten Fahrzeugs angepaßt werden. Außerdem muß berücksichtigt werden, daß bei abruptem Anbremsen zunächst noch nicht die volle Vorderradaufstandskraft des späteren eingefederten Zustands vorliegt, so daß der Blockierdruck des Vorderrades zu Anfang der Bremsung relativ niedrig liegt. Die Beispielswerte aus Figur 5a beziehen sich auf eine typische Maschine der 1000ccm-Klasse mit Vorderrad-Doppelscheibenbremse. Generell ist für geringe Schräglagewinkel unter $\Phi$_krit (hier 10°) keine Begrenzung des Anbremsdrucks vorgesehen. Zwischen $\Phi$_krit und einem extremen Schräglagewert $\Phi$_ext (hier 45°), der auf gut haftenden Böden gerade noch beherrscht werden kann, wird der Abregeldruck Pab linear von einem oberen Wert Pab ($\Phi$_krit) (hier 20bar) auf einen unteren Wert Pab ($\Phi$_ext) (hier 10bar) verringert. Bei weiterer Zunahme der Schräglage bleibt der minimale Abregeldruck Pab konstant auf dem Wert Pab ($\Phi$_ext).

$$Pab = Pab\,(\Phi\_krit) - K1 * (\Phi - \Phi\_krit)$$

für $\Phi\_krit < \Phi < \Phi\_ext$
mit $K1 = (Pab (\Phi\_krit) - Pab (\Phi\_ext)) / (\Phi\_ext - \Phi\_krit)$

$$Pab = Pab (\Phi\_ext)$$

für $\Phi > = \Phi\_ext$

Anstelle der linearen Funktion zwischen den Eckpunkten Pab ($\Phi\_krit$) und Pab ($\Phi\_ext$) können auch andere (beispielsweise Exponentialfunktionen) gewählt werden.

Durch Veränderung der Bremsencharakteristik (vor allem durch Fading nach häufigen Bremsvorgängen) und durch Alterung der Bremsscheiben bzw. -beläge ändert sich auch der Zusammenhang zwischen dem Radzylinderbremsdruck und der effektiv wirksamen Bremskraft. Bei Auftreten starker Fading-Effekte kann der oben beschriebene Mechanismus des Druckhaltens auf Pab zu Unterbremsungserscheinungen führen, da der Radblockierdruck nun zu weit über Pab liegt.

Hier wird deshalb ein erweiterter Mechanismus vorgeschlagen, der den zunächst konstant gehaltenen Abregeldruck Pab dann erhöht, wenn die berechnete Fahrzeug-Referenzverzögerung AREF einen erwarteten Wert AREFmin unterschreitet. Die Erhöhung der Pab-Funktion (wie in Figur 5a durch die Kennlinienschar dargestellt), geschieht in kleinen Schritten, beginnend mit der statischen Kennlinie, jeweils nach einer festen Zeitdauer T:

$$Pab (t+T) = Pab (t) * (1 + K6) \qquad \text{mit } K6 << 1$$

Durch die Verschiebung der gesamten Kennlinie kann auch noch auf eine Änderung von $\Phi$ reagiert werden. Die schrittweise Verschiebung der Pab-Kennlinie erfolgt so lange, bis AREF den Grenzwert AREFmin überschreitet. Dabei macht man sich die Tatsache zunutze, daß das Vorderrad aufgrund der Unterbremsung in sehr kleinem Schlupf läuft und praktisch die reale Fahrzeuggeschwindigkeit VF widerspiegelt. Die Berechnung von AREF ist daher sehr zuverlässig und kann schon kurze Zeit nach einer Druckänderung ausgewertet werden.

Figur 5 zeigt dazu beispielhaft das Zeitdiagramm einer Kurvenbremsung, bei der der Vorderradbremsdruck PO zum Zeitpunkt Tab zunächst auf einen der Schräglage $\Phi$ entsprechenden Wert Pab beschränkt wird. Zum Zeitpunkt $t = Tab + T$ wird festgestellt, daß die erreichte Fahrzeugverzögerung AREF unter dem minimal erwarteten Wert AREFMin liegt. Die Verschiebung der Pab-Kennlinie bewirkt nun, daß der eingeschlossene Druck PO zu niedrig liegt, so daß durch kurzes Öffnen des Ventils zwischen HBZ und RBZ eine Erhöhung von PO auf den neuen Pab-Wert erfolgt. Im Falle des Plunger-Modulators nach Figur 4 ist dieser Druckangleich sehr einfach dadurch möglich, daß eine dem neuen Pab-Wert entsprechende Motorzugkraft MF eingestellt wird. Das Kugelventil (KV) wird sich dann kurzfristig öffnen, bis der erhöhte RBZ-Druck PO zu einem erneuten Gleichgewicht führt und das Ventil automatisch wieder schließt.

Im Beispiel aus Figur 5 wird Pab nochmals zum Zeitpunkt $t = Tab + 2T$ erhöht, wodurch das Fahrzeug die gewünschte Minimalverzögerung AREFmin erreicht.

Die veränderte Pab-Funktion könnte prinzipiell gespeichert und für spätere Kurvenbremsungen als Basisfunktion herangezogen werden. Dabei besteht jedoch die Gefahr, daß durch eine zwischenzeitliche Abkühlung der Bremse vorherige Fading-Effekte behoben sind, so daß die Abregeldrücke Pab nun zu hoch liegen und schon zu Radblockiertendenzen führen.

Sinnvoll ist daher, die veränderte Pab-Funktion nur in einem flüchtigen Speicher abzulegen. Bei erneutem Einschalten der Zündung liegt nur noch die im permanenten Speicher befindliche Pab-Funktion als Startfunktion vor.

Solange die Zündung eingeschaltet ist, ist es vorteilhaft, die während einer Kurvenbremsung veränderte Pab-Funktion langsam über der Zeit zu reduzieren, bis wieder die statische Kennlinie erreicht ist. Dann kann bei einer erneuten Kurvenbremsung die bereits korrigierte Pab-Funktion als Startfunktion dienen.

Ein weiteres Problem besteht in der Festlegung der minimalen Verzögerungsanforderung AREFmin. Generell muß man bei einer geringen Schräglage eine höhere Verzögerung fordern. Wenn man bedenkt, daß eine größere Schräglage nur bei hohen und mittleren Reibwerten physikalisch möglich ist, kann man den beschriebenen Mechanismus auf die praktisch relevanten Bremssituationen auf trockenem oder nassem Asphalt bzw. Beton beschränken. Entsprechend ist bereits die Pab-Funktion ausgelegt, die ja davon ausgeht, daß die $\Phi$-abhängigen Abregeldrücke noch nicht zum Blockieren des Rades führen. Sollte eine Kurvenbremsung auf niedrigen Reibwerten erfolgen, so würde der Mechanismus der druckbedingten Abregelung nicht wirken, da vor dem Erreichen des Abregeldrucks eine Radblockiertendenz eintreten würde. Hier ist vorgesehen, eine Minimalverzögerung gemäß der Funktion nach Figur 5b zu fordern:

$$AREFmin = AREFmin (\Phi\_krit) - K3 * (\Phi - \Phi\_krit)$$

für $\Phi\_krit < \Phi < \Phi\_ext$
mit $K3 = (AREFmin (\Phi\_krit) - AREFmin (\Phi\_ext)) / (\Phi\_ext - \Phi\_krit)$

$$AREFmin = AREFmin (\Phi\_ext)$$

für $\Phi \geq \Phi\_ext$

Außerdem muß berücksichtigt werden, ob das Hinterrad mitgebremst wird. Hier wird geprüft, ob die Hinterrad-ABS-Regelung aktiv ist. In diesem Fall wird AREFmin um einen Korrekturfaktor erhöht:

$$AREFmin = AREFmin * 1.2$$

Der nicht geregelte Fall der Hinterradbremsung wird nicht berücksichtigt, da davon ausgegangen wird, daß ein Fahrer bei starker Vorderradbremsung in Schräglage keinen nennenswerten Hinterraddruck aufbringen kann, der nicht zur Hinterradüberbremsung führt, da der Blockierdruck am Hinterrad in solchen Fällen sehr niedrig liegt.

Eine kritische Bremssituation im Extrembereich ist dann gegeben, wenn ein Motorrad zunächst bei Geradeausfahrt stark angebremst wird, so daß sich die Blockierschutzvorrichtung aktiv schaltet, und dann noch während der geregelten Bremsung eine Kurvenfahrt eingeleitet wird. Das Problem besteht nun darin, daß die Radbremsdrücke bereits bei Einleitung der Kurvenfahrt zu hoch sein können. In diesem Fall kann beispielsweise am Vorderrad sofort ein starker Schlupfeinlauf auftreten, der dann durch die normale ABS-Regelung ausgeregelt werden muß. Dabei kann der Fall eintreten, daß die Stärke der erforderlichen Druckmodulation zu erheblichen Lenkmomentschwankungen führt, die vom Fahrer nicht beherrscht werden, so daß das Fahrzeug instabil wird. Wenn die Kurvenfahrt aber erkannt wird, bevor ein erneuter Radgeschwindigkeitseinbruch stattfindet, kann die Kurvendrucksteuerung weitere Radblockiertendenzen ganz unterdrücken, indem sie den ABS-Regler veranlaßt, den Vorderradbremsdruck in der Wiederbelastungsphase unter dem zuletzt festgestellten Blockierdruck zu halten.

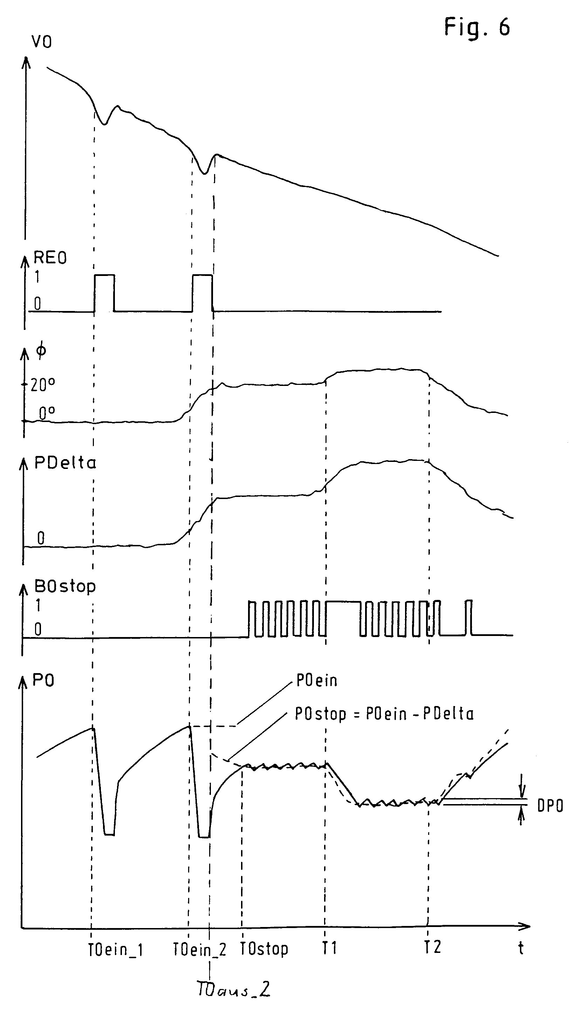

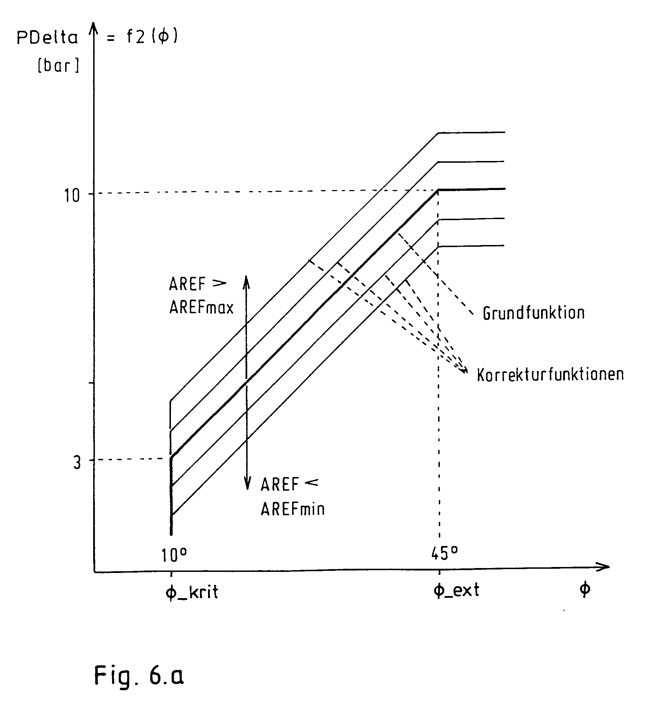

Figur 6 zeigt dazu das Zeitdiagramm eines Bremsvorgangs, bei dem zum Zeitpunkt TOein_2 eine Blockiertendenz am Vorderrad auftritt. Nach der Ausregelung beginnt zum Zeitpunkt TOaus_2 der erneute Druckaufbau, um wieder ein gutes Druckniveau zu erreichen. In dieser Wiederbelastungsphase (Druckaufbauphase) versucht der normale ABS-Regler, durch vorsichtige Druckerhöhung wieder an den früheren Radblockierdruck heranzufahren. Unter homogenen Bodenverhältnissen ist dieser Punkt ein etwas zu hoher Druckpunkt, bei dessen Erreichen wieder eine Radblockierneigung zu erwarten ist. Der Mechanismus sieht daher vor, den Bremsdruck PO nicht wieder auf den Blockierdruck POein zu erhöhen, sondern nur noch einen Druckwert anzufahren, der um einen bestimmten Betrag PDelta unter POein liegt.

In Figur 6 veranlaßt die Kurvendrucksteuerung den ABS-Regler zum Zeitpunkt TOstop, den Druckaufbau zu beenden, da der Druck PO den Wert POein - PDelta erreicht hat. Unter homogenen Bodenverhältnissen wird dieser Druckwert zu keiner weiteren Vorderradblockiertendenz führen, so daß der Fahrer im weiteren Verlauf der Bremsung keine großen Lenkmomentschwankungen zu bewältigen braucht. Falls die Fahrzeugschräglage $\Phi$ nun noch zunehmen sollte, so liegt der bereits erreichte Druckpunkt aber schon zu hoch. Deshalb reduziert der ABS-Regler den Vorderradbremsdruck PO um einen kleinen DPO in jedem Regelungszyklus, in dem die Kurvendrucksteuerung das Signal gesetzt hält. Bei konstantem $\Phi$ erfolgt also ein ständiger Wechsel zwischen Druckauf- und -abbau um kleine Beträge, wie in Figur 6 dargestellt. Durch die Druckreduzierung fällt PO immer wieder unter den Vergleichswert POstop, so daß die Kurvendrucksteuerung inaktiv wird und der ABS-Regler den normalen Druckaufbau fortsetzt. Dadurch überschreitet PO jedoch gleich wieder den Wert POstop, so daß wieder die Kurvendrucksteuerung aktiv wird. Durch das sägezahnförmige Druckauf- und -abbauen wird ein konstantes Druckniveau gehalten.

Bei wachsendem $\Phi$ (beginnend bei T1 in Figur 6) bewirkt die Vergrößerung von PDelta ein Absenken von POstop. Die Kurvendrucksteuerung setzt nun so lange das Signal BOstop, bis der ABS-Regler den Druck PO durch schrittweisen Abbau unter den Sollwert POstop reduziert hat. Entsprechend erfolgt bei verringerter Schräglage (bei T2 in Figur 6) eine Anhebung von POstop, so daß der ABS-Regler wieder seinen Druckaufbau fortsetzt. ABS-Regler (3) und Kurvendrucksteuerung (4) arbeiten also parallel:

Wenn eine Überbremsungssituation eintritt, übernimmt der ABS-Regler die Kontrolle und regelt die Bremsdrücke durch entsprechende Ansteuerung des Druckmodulators. Für den Fall, daß eine Kurvenfahrt erkannt wurde, berechnet die Kurvendrucksteuerung sichere Maximaldruckpunkte und verhindert, daß der ABS-Regler diese in den Wiederbelastungsphasen überschreitet. Der Betrag von PDelta, um den der Blockierdruck POein unterschritten werden muß, wird von der Kurvendrucksteuerung nach dem gemessenen Schräglagewinkel $\Phi$ berechnet. Dazu wird gemäß Figur 6a folgende Funktion PDelta = f2 ($\Phi$) gewählt:

$$PDelta = PDelta (\Phi\_krit) + K2 * (\Phi - \Phi\_krit)$$

für $\Phi\_krit < \Phi < \Phi\_ext$
mit K2 = (PDelta ($\Phi\_ext$) - PDelt ($\Phi\_krit$)) / ($\Phi\_ext - \Phi\_krit$)

$$PDelta = PDelta (\Phi\_ext)$$

für $\Phi \geq \Phi\_ext$

Auch bei diesem Druckhalte-Mechanismus wird sicherheitshalber eine minimale Fahrzeugverzögerung AREFmin gemäß Figur 5b gefordert. Falls AREF zum Zeitpunkt t = TOaus + T den Minimalwert AREFmin unterschreiten sollte, wird PO um einen kleinen Betrag erhöht. Dies geschieht indirekt durch Veränderung der obigen Funktion (s. Kennlinienschar in Figur 6a):

$$PDelta = PDelta * (1-K7)$$

Nach weiterem Ablauf des Zeitkorrekturintervalls T, also zum Zeitpunkt $t = TOaus + 2T$, erfolgt wieder ein Vergleich von AREF mit AREFmin. Wenn AREF den Wert AREFmin überschritten hat, wird der erreichte Vorderraddruck PO gehalten, ansonsten erfolgt ein weiterer Druckaufbau über eine erneute Korrektur der PDelta-Kennlinie. Die korrigierte PDelta-Kennlinie bleibt nur so lange relevant, bis eine erneute Vorderradblockiertendenz festgestellt wird. Danach wird wieder von der Basiskennlinie ausgegangen, da sich die Bodenverhältnisse ja geändert haben können. Durch die Verschiebung der PDelta-Kennlinie kann auch wieder auf veränderliche Schräglagewinkel $\Phi$ reagiert werden.

Wenn sich der Neigungswinkel des Fahrzeugs während einer Regelbremsung verändert, nachdem der obige Druckhaltemechanismus wirksam geworden ist, so wird PO nach der Funktion aus Figur 6a auf den Wert POein - PDelta korrigiert, wobei permanent die AREF-überprüfung und ggf. die Korrektur der Kennlinie erfolgt. Die bewirkt eine Reduzierung von PO, wenn sich der Schräglagewinkel $\Phi$ erhöht. Entsprechend erfolgt eine Anhebung von PO, wenn $\Phi$ geringer wird, damit das Fahrzeug wieder eine der neuen Bremssituationen angemessene Verzögerung erreicht. Diese Maßnahme zielt darauf hin, dem Fahrer im Falle einer zunehmenden Schräglage $\Phi$ auf Kosten einer etwas verschlechterten Fahrzeugverzögerung ein höheres Maß an Seitenführungskraft am Vorderrad zu gewährleisten, wobei möglichst keine überbremsungszustände mehr am Vorderrad auftreten sollen. Erst bei geringer Schräglage kann durch Erhöhung von PO wieder eine meßbare Vorderradblockiertendenz riskiert werden.

Sollte das Druckhalten während einer Kurvenbremsung zu einer allmählichen Zunahme in der Fahrzeugverzögerung führen, so ist trotz des konstanten Bremsdrucks eine erhöhte Blockiergefahr für das Vorderrad gegeben. Um den negativen Auswirkungen dieses Effekts entgegenzuwirken, wird hier vorgesehen, die Funktion PDelta = f2 ($\Phi$) nach oben zu korrigieren, falls die Fahrzeug-Referenzverzögerung AREF einen großen Schwellwert AREFmax überschreitet (s. Figur 6a). Die erlaubte Maximalverzögerung AREFmax wird durch Multiplikation von AREFmin mit einem konstanten Faktor gebildet:

$$AREFmax = K5 * AREFmin \qquad mit\ K5 > 1$$

Ziel der Kennlinienkorrektur ist es also, die Fahrzeugverzögerung in dem in Figur 5b gezeigten $\Phi$-abhängigen Bandbereich zu halten. Sollten die Bodenverhältnisse keine hinreichenden Reibwerte aufweisen, so können trotz der prophylaktischen Maßnahmen der Druckbeschränkung und Verzögerungsregelung Blockiertendenzen am Vorderrad auftreten. In solchen Fällen wird der normale ABS-Regler aktiv und stellt u.U. Druckwerte ein, die unter dem Niveau der von der Kurvendrucksteuerung geforderten Minimalwerte liegen, so daß dann die Aktionen des ABS-Reglers dominieren und die Kurvendrucksteuerung zeitweise unwirksam machen. Bei allen vorangegangenen Überlegungen wurde davon ausgegangen, daß die RBZ-Drücke bekannt sind. Mit Hilfe von Bremsdruckgebern könnten prinzipiell die absoluten RBZ-Drücke permanent gemessen werden. Mit dem zuvor dargestellten Plunger-Druckmodulator lassen sich aber alle Druckrelationen direkt aus den Kolbenwegpositionen ohne Mehraufwand und ohne Verzug herleiten: Sämtliche zuvor verwendeten Druckwerte können also ersetzt werden durch Wegwerte z, die beispielsweise eine induktive Wegemeßspule gemäß Figur 4 anzeigt; alle Druckdifferenzbeträge (Druckabbau- und Druckaufbaugradienten) werden ersetzt durch Wegabschnitte. Darüber hinaus sind auch die absoluten Bremsdrücke jederzeit bekannt, da diese unmittelbar aus der benötigten Motorzugkraft berechnet werden können.

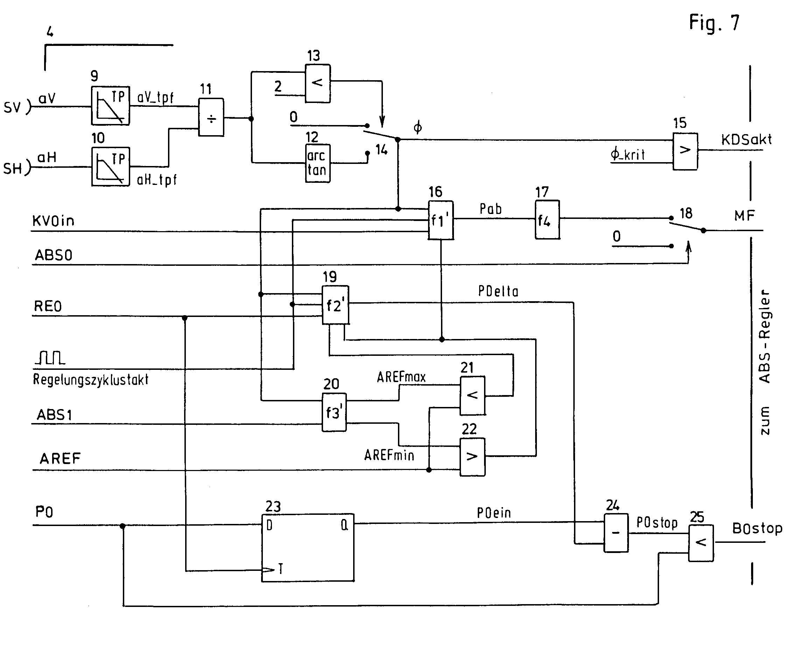

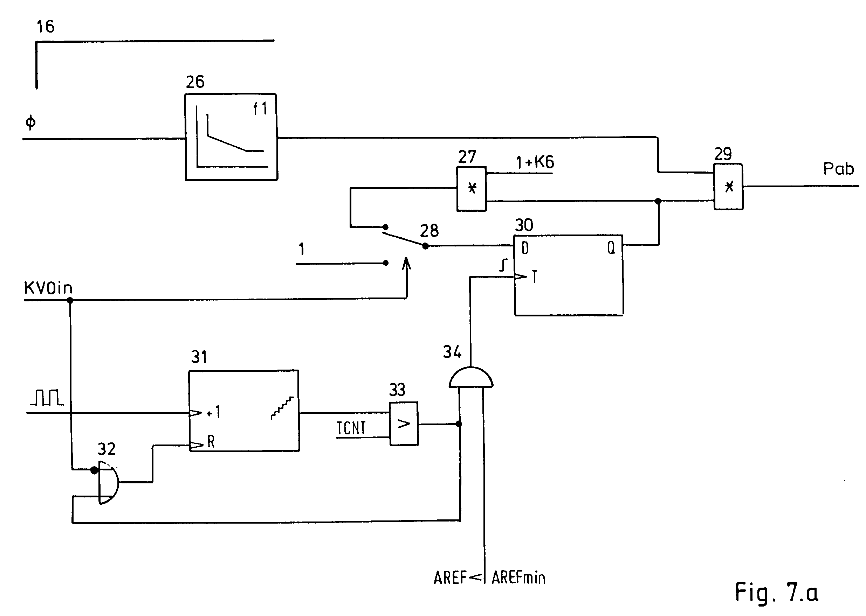

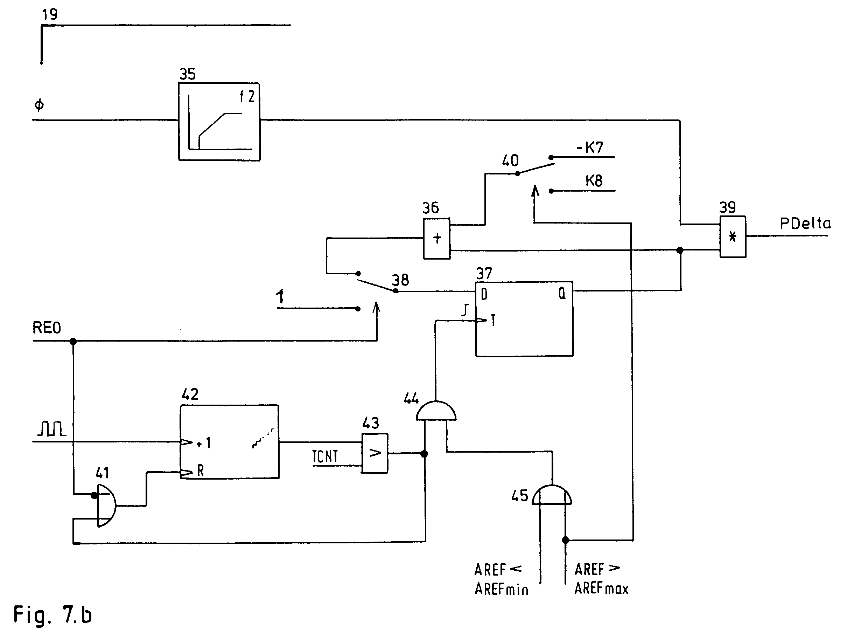

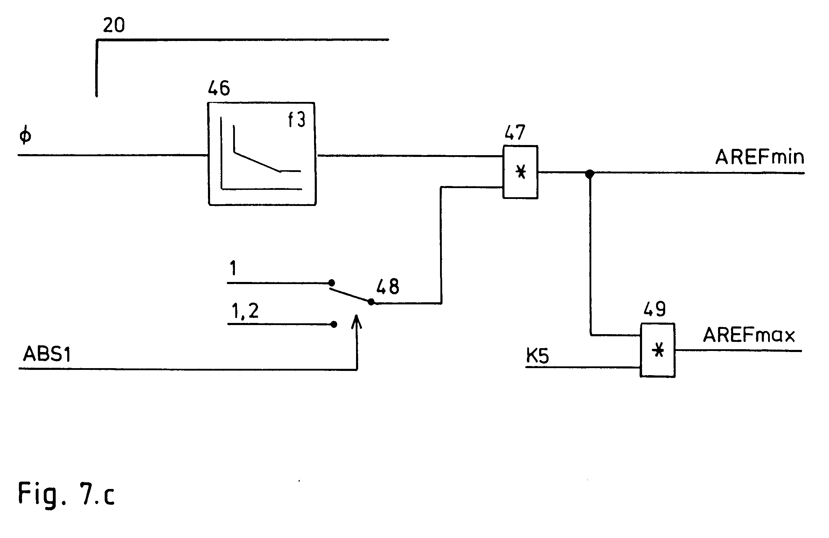

In Figur 7 ist ein Schaltungsbeispiel dargestellt. Die Tiefpaßfilter (9) und (10) filtern die hochfrequenten Stör- und Jitteranteile der Beschleunigungssensoren (SH) und (SV) aus und bilden so ein horizontales und ein vertikales Beschleunigungsnutzsignal. Der Dividierer (11) bildet den Quotient aus dem vertikalen Signal aV_tpf und dem horizontalen Signal aH_tpf. Der Funktionsgenerator (12) berechnet den Arcustangens des Quotienten und damit den gemessenen Schräglagewinkel $\Phi$ des Fahrzeugs. Falls die Horizontalbeschleunigung hinreichend groß ist, so daß der Quotient aV_tpf den Schwellenwert 2 unterschreitet, so schaltet der Vergleicher (13) den Multiplexer (14) so, daß dieser den Winkelwert $\Phi$ zum Vergleicher (15) durchschaltet. Falls keine hinreichende Horizontalverzögerung vorliegt, schaltet (14) den konstanten Winkelwert 0 durch. Der Vergleicher (15) prüft, ob $\Phi$ den kritischen Schräglagewinkel $\Phi\_krit$ überschreitet. In diesem Fall meldet sich die Kurvendrucksteuerung mit dem Signal KDSakt beim ABS-Regler aktiv. Sollte KDSakt logisch '0' sein, so ignoriert der ABS-Regler alle von der Kurvendrucksteuerung übergebenen Daten, da keine nennenswerte Schräglage vorliegt und im Falle einer Radüberbremsung nur der normale Antiblockierschutz aktiv wird.

Wenn das ABS gerade keine Vorderradregelung durchführt, so bestimmt die Kurvendrucksteuerung mit Hilfe des Funktionsgenerators (16) einen maximalen Vorderradbremsdruck Pab, der von der aktuellen Schräglage $\Phi$ abhängig ist. Mit Hilfe eines modulatorspezifisch arbeitenden Funktionsgenerators (17) wird dieser Abregeldruck zwecks Ansteuerung des oben beschriebenen Plunger-Druckmodulators in eine Motorzugkraft MF umgerechnet und mit Hilfe des Multiplexers (18) auf den Druckmodulator gegeben bzw. als logische Größe dem ABS-Regler übergeben, der daraufhin den Druckmodulator in gewünschter Weise ansteuert. Bei der Variablen MF kann es sich also - je nach geeigneter Implementierungsmöglichkeit - entweder um eine physikalische Größe handeln, die den verwendeten Druckmodulator direkt steuert, oder nur um ein Anweisungssignal an den ABS-Regler, der seinerseits die Ansteuerung übernimmt. Falls das ABS-System den Vorderradkanal gerade aktiv regelt (ABSO = '1'), muß am Vorderrad bereits ein Überbremsungszustand vorgelegen haben, so daß die prophylaktische Maßnahme der Vorderraddruckbegrenzung unwirksam ist. In diesem Fall gibt der Multiplexer (18) den Wert MF = 0 aus, woraufhin der ABS-Regler den Mechanismus ignoriert. Der Block zur Bildung der Pab-Funktion setzt sich gemäß Figur 7a aus den Unterblöcken (26) bis (34) zusammen. Die statische Grundfunktion Pab = f1 ($\Phi$) wird durch den Funktionsgenerator (26) erzeugt. Die übrigen Blöcke (27) bis (34) dienen der dynamischen Funktionskorrektur für den oben diskutierten Fall, daß die Druckabregelung anhand der Grundfunktion aufgrund einer veränderten Bremsencharakteristik nicht zu der geforderten Minimalverzögerung AREFmin führt. Dazu beinhaltet das Register (30) einen Korrekturfaktor, mit dem der vom Funktionsgenerator (26) ausgegebene Wert mit Hilfe des Multiplizierers (29) vergrößert wird. Solange keine Druckabregelung erfolgt, das Kugelventil des Vorderrades also geöffnet ist (KVOin = '1'), schaltet der Multiplexer (28) den Wert 1 auf das Register (30), so daß effektiv keine Funktionskorrektur erfolgt. Wenn eine kurvenbedingte Vorderraddruckabregelung einsetzt, geht das Signal KVOin von '1' auf '0', so daß der Multiplexer (28) umschaltet und den vom Multiplizierer (27) gelieferten Wert 1+K6 an den Registereingang legt. Dieser neue Korrekturfaktor wird allerdings erst dann in das Register (30) übernommen, wenn am Takteingang (T) eine positive Signalflanke auftritt. Dazu erhält der Zähler (31) an seinem Reset-Eingang (R) über den negierenden Eingang des ODER-Gatters (32) einen positiven Rücksetzimpuls, wenn das Signal KVOin von '1' auf '0' geht. In der nachfolgenden Zeit wird der Zähler (31) mit dem Regelungszyklustakt hochgezählt, bis sein Zählerstand den Vergleichswert TCNT erreicht. Dann erzeugt der Vergleicher (33) eine '1' an seinem Ausgang und setzt damit den Zähler (31) über das ODER-Gatter (32) erneut auf 0 zurück, so daß der Zählvorgang wiederholt abläuft. Gleichzeitig wird mit der kurzzeitigen '1' am Ausgang des Vergleichers (33) über das UND-Gatter (34) die benötigte Flanke zur Übernahme des Korrekturwerts dann und nur dann erzeugt, wenn das UND-Gatter (34) durchschaltet, d. h. es muß am rechten Eingang von (34) ebenfalls eine logische '1' anliegen. Dies ist genau dann der Fall, wenn die Fahrzeug-Referenzverzögerung AREF den geforderten Minimalwert AREFmin unterschreitet. Die Blöcke (31), (32) und (33) bilden also eine Zeitschaltung, die mit dem Beginn der Vorderraddruckabregelung jeweils nach Ablauf eines kurzen Zeitabschnitts T eine Signalflanke liefert, die einen neuen Funktionskorrekturwert in das Register (30) einspeist, falls das Fahrzeug noch nicht die geforderte Minimalverzögerung AREFmin aufweist. Über den Vergleichswert TCNT und den Regelungszyklustakt läßt sich die Zeit T einstellen. Wenn beispielsweise alle 80ms eine Überprüfung von AREF bzw. eine Korrektur der Funktion erfolgen soll (T = 80ms) und die Regelungszykluszeit 8ms beträgt, so muß der Vergleichswert TCNT auf 9 gesetzt werden. Nach n Korrekturschritten beinhaltet das Register (30) den Wert $(1 + K6)^{**n}$, da der gespeicherte Wert bei jeder Korrektur über den Multiplizierer um den konstanten Faktor (1 + K6) erhöht wird. Das Signal KVOin, das den Prüf- und Korrekturvorgang einleitet, wird hier vom ABS-Regler an die Kurvendrucksteuerung übergeben. Dabei wird davon ausgegangen, daß der ABS-Regler das Signal auf logisch '1' setzt, wenn das Kugelventil des Vorderradkanals geöffnet ist, was bei dem zugrundegelegten Plunger-Modulator einfach aufgrund der meßbaren Kolbenstellung festgestellt wird. Beim überschreiten des Abregeldrucks schließt das Ventil aufgrund der unterstützenden Motorzugkraft selbsttätig. Hier wird davon ausgegangen, daß der ABS-Regler diesen Vorgang anhand des verfahrenden Kolbenwegs registriert und entsprechend das Signal KVOin auf '0' rücksetzt. Nachfolgend soll der ABS-Regler KVOin erst dann wieder auf '1' setzen, wenn das Ventil wieder für einen längeren Zeitraum von ca. 100ms geöffnet ist.

Figur 7 beinhaltet in Form der Komponenten (19), (23), (24) und (25) noch den zweiten Kurvendruck-Steuermechanismus, der dann in Kraft tritt, wenn am Vorderrad bereits eine aktive ABS-Reglung aufgrund eingetretener Radblockiertendenzen begonnen hat. Wenn am Vorderrad eine Blockiertendenz ausgeregelt wurde (nur so konnte das ABS am Vorderrad aktiv werden), so veranlaßt die Kurvendrucksteuerung den ABS-Regler, den Vorderraddruck PO nicht wieder bis auf den früheren Blockierdruck POin zu erhöhen, sondern bei Erreichen eines tieferen Druckpunktes den Bremsdruckaufbau bereits anzuhalten, um keine weitere Blockierneigung mehr zu provozieren. Dazu speichert das Register (23) jeweils den letzten Druckwert von PO ab, der zu einer Radüberbremsung geführt hat. Dies geschieht mit der positiven Taktflanke am T-Eingang, auf den das Signal REO geführt ist. REO wird vom ABS-Regler jeweils zu Beginn einer erkannten Radblockierneigung auf '1' gesetzt und bei Einlauf des Rades in den stabilen Schlupfbereich wieder auf '0' zurückgesetzt (s. Figur 6). Der Funktionsblock (19) berechnet in Abhängigkeit des aktuellen Schräglagewinkels $\Phi$ einen Druckbetrag PDelta, der mit dem Subtrahierer (24) von dem gespeicherten Blockierdruck POein abgezogen wird. Daraus ergibt sich der maximal erlaubte Vorderraddruck POstop. Wenn PO diesen Wert erreicht, schaltet der Vergleicher (25) seinen Ausgang BOstop auf '1' und zeigt dem ABS-Regler damit an, daß der Bremsdruckaufbau prinzipiell bei dem erreichten Niveau angehalten, und daß PO dazu in diesem Zykıus um den kleinen Betrag DPO reduziert werden muß.

Der Funktionsgenerator (19) zur Erzeugung der PDelta-Funktion setzt sich gemäß Figur 7b aus den Komponenten (35) bis (45) zusammen. Die prinzipielle Arbeitsweise ist identisch mit der des bereits oben beschriebenen Generators (16). Die statische Grundfunktion ist hier im Block (35) realisiert. Das Register (37) speichert den Korrekturfaktor, mit dem die Grundfunktion mit Hilfe des Blocks (39) multipliziert wird. Der Rücksetzvorgang auf den Faktor 1 geschieht hier mit Hilfe des Signals REO während jeder neuen Vorderradüberbremsung. Die jeweils darauffolgende Wiederbelastungsphase (REO = '0') startet immer mit der Grundfunktion. Eine Korrektur der PDelta-Funktion, die wieder aufgrund zu geringer Fahrzeugverzögerungswerte geschieht, erfolgt hier in Form einer Reduzierung der Funktion um den Faktor (1- n * K7) nach n Korrekturschritten.

Wie schon oben erwähnt, erfolgt eine Korrektur der Funktionen f1 und f2 nur dann, wenn die Fahrzeugverzögerung aufgrund des Eingriffs der Kurvendrucksteuerung zu gering wird. Dies überwachen die Komponenten (20) und (22) aus Figur 7. Der Funktionsgenerator (20) bildet in Abhängigkeit des Schräglagewinkels Φ eine zu erwartende Minimalverzögerung AREFmin. Diese wird mit der tatsächlich vom ABS-Regler berechneten FahrzeugReferenzverzögerung AREF über den Vergleicher (22) laufend verglichen. Für AREF < AREFmin schaltet der Vergleicher (22) eine logische '1' auf seinen Ausgang und veranlaßt die Funktionsblöcke (16) und (19) zu einer Korrektur ihrer Funktionskennlinien zu den oben beschriebenen definierten Zeitpunkten.

Der Funktionsblock (19) beinhaltet zusätzlich noch die Möglichkeit, die PDelta-Kennlinie nach oben zu korrigieren, falls die Fahrzeugverzögerung so groß wird, daß eine baldige Vorderradüberbremsung befürchtet werden muß. Dies ist dann gegeben, wenn AREF den ebenfalls Φ-abhängigen Wert AREFmax überschreitet. Für diesen Fall schaltet der Multiplexer (40) die Konstante +K8 auf den Addierer (36), so daß bei Auftreten der nächsten Taktflanke am T-Eingang der im Register (37) gespeicherte Korrekturwert um den Betrag K8 erhöht wird.

Der Funktionsblock (20) setzt sich gemäß Figur 7c noch aus den Blöcken (46) bis (49) zusammen. Block (46) repräsentiert den eigentlichen Funktionsgenerator. Über den Multiplexer (48) und den Multiplizierer (47) wird die AREFmin-Grundfunktion noch um den Faktor 1.2 erhöht, falls die Hinterradregelung aktiv ist, was der ABS-Regler durch das Signal ABS1 = '1' anzeigt. Die AREFmax-Funktion bildet der Multiplizierer (49), indem er die AREFmin-Werte mit dem konstanten Faktor K5 beaufschlagt. Der Vergleicher (21) schaltet eine logische '1' auf seinen Ausgang, wenn der aktuelle AREF-Wert den maximal tolerierten Vergleichswert AREFmax überschreitet. Dieses Ereignis führt dazu, daß über das ODER-Gatter (45) die Torschaltung (44) auf Durchgang geschaltet wird, so daß zum nächsten Korrekturzeitpunkt ein verbesserter Wert in das Register (37) eingetragen werden kann.

**Patentansprüche**

1. Antiblockierregelsysteme für Motorräder, bestehend aus Radsensoren (5,6), einer Überwachungsschaltung (3), die aus den Signalen der Sensoren Überbremsungszustände erkennt und entsprechende Ansteuersignale erzeugt, und einem Druckmodulator (1), der durch die Ansteuersignale die Bremsdrücke an den beiden Fahrzeugrädern einstellt, <u>dadurch gekennzeichnet</u>, daß zwecks Kurvenfahrterkennung und beherrschbarer Kurvenregelbremsung die Überwachungsschaltung (3) durch eine Hilfsschaltung (4) ergänzt ist, die über zwei Beschleunigungssensoren (7) und (8) den Schräglagewinkel Φ des Fahrzeugs berechnet und, falls dieser Winkel eine kritische Schwelle Φ krit überschreitet, den ABS-Regler (3) duch Steuersignale veranlaßt, den Bremsdruckanstieg am Vorderrad schon vor Erreichen des zu erwartenden vorbestimmten Blockierdrucks anzuhalten.

2. Antiblockierregelsystern nach Anspruch 1, <u>dadurch gekennzeichnet</u>, daß die Beschleunigungssensoren (7) und (8) so angebracht sind, daß ein Sensor die horizontale Fahrzeugbeschleunigung senkrecht zur Fahrtrichtung und senkrecht zur Fahrzeug-Vertikalachse erfaßt, während der zweite Sensor rechtwinklig dazu die Vertikalbeschleunigung des Fahrzeugs mißt, wobei eine Tiefpaßfilterung die hochfrequenten Jitteranteile der Einzelsignale unterdrückt und zur Verhinderung von niederfrequenten bodenbedingten Störanteilen zusätzlich gefordert wird, daß das Horizontalsignal mindestens den halben Wert des Vertikalsignals überschreiten muß, damit der aus den Sensorsignalen berechnete Schräglagewinkel Φ als gültig gilt.

3. Antiblockierregelsystem nach Anspruch 1, dadurch gekennzeichnet, daß die Beschleunigungssensoren (7) und (8) senkrecht zur Fahrtrichtung und in Fahrtrichtung jeweils nach links und nach rechts um 45° zur Fahrzeugvertikalachse geneigt so angebracht sind, daß beide Sensoren horizontale und vertikale Anteile der Fahrzeugbeschleunigung erfassen, wobei eine Tiefpaßfilterung die hochfrequenten Störungen der Einzelsignale unterdrückt und zur Eliminierung von niederfrequenten gleichphasigen Signalanteilen zusätzlich gefordert wird, daß der Betrag der Differenz der Sensorsignale einen definierten Schwellwert überschreitet, damit der aus den Sensorsignalen berechnete Schräglagenwinkel Φ als gültig gilt.

4. Antiblockierregelsystem nach den Ansprüchen 1 bis 3, <u>dadurch gekennzeichnet</u>, daß die Kurvendrucksteuerung außerhalb der aktiven ABS-Regelung einen maximal erlaubten Vorderraddruck Pab in Abhängigkeit des gemessenen und berechneten Schräglagewinkels vorgibt, wobei Pab für kleine Schräglagewinkel Φ einen hohen Wert etwas unterhalb des zu erwartenden Radblockierdrucks annimmt und mit wachsendem Φ nach einer linearen oder exponentiellen Funktion stetig abnimmt.

5. Antiblockierregelsysteme nach Anspruch 4, <u>dadurch gekennzeichnet</u>, daß die Kurvendrucksteuerung eine aktive Begrenzung des Vorderraddrucks auf den Wert Pab durchführt, auch wenn das ABS noch keine Vorderradblockierneigung erkennt, damit beim Anbremsvorgang in Schräglage zumindest auf Böden mit guten und mittleren Reibwerten eine hinreichende Seitenführungskraft am Vorderrad gewährleistet ist.

6. Antiblockierregelsystem nach Anspruch 5, <u>dadurch gekennzeichnet</u>, daß die Begrenzung des Vorderraddrucks auf den Wert Pab dadurch erreicht wird, daß die Kurvendrucksteuerung im Falle eines Plunger-Druckmodulators eine prophylaktische Voreinstellung einer Motorzugkraft durchführt, wobei diese Kraft so eingestellt wird, daß der Modulator den Vorderradbremszylinder selbsttätig mechanisch vom Hauptbremszylinder abtrennt, falls dessen Druck den Wert Pab überschreitet, so daß die Druckbegrenzung auf Pab keine schnellen Überwachungsmechanismen erfordert.

7. Antiblockierregelsysteme nach den Ansprüchen 1 bis 6, <u>dadurch gekennzeichnet</u>, daß zu definierten äquidistanten Zeitpunkten nach Einsetzen der Druckbegrenzung auf Pab eine Uberprüfung der erreichten Fahrzeugverzögerung AREF erfolgt, und daß eine Korrektur der Funktion Pab = f1 ($\Phi$) , dann durchgeführt wird, wenn AREF einen geforderten Minimalwert AREFmin unterschreitet, wobei die Korrektur so erfolgt, daß bei zu geringer Verzögerung AREF ein höherer Druck Pab eingestellt wird.

8. Antiblockierregelsystem nach Anspruch 7, <u>dadurch gekennzeichnet</u>, daß die Minimalverzögerung AREFmin selbst in Abhängigkeit der aktuellen Schräglage $\Phi$ nach einer reziproken Funktion berechnet wird, so daß mit wachsender Schräglage eine geringere Verzögerung des Fahrzeugs erzwungen wird.

9. Antiblockierregelsystem nach Anspruch 7 und 8, <u>dadurch gekennzeichnet</u>, daß die Minimalverzögerung AREFmin dann um einen konstanten Faktor erhöht wird, wenn am Hinterradkanal eine Blockierschutzregelung aktiv ist, da aufgrund der starken Hinterradbremsung ein höheres Verzögerungsniveau erwartet werden muß.

10. Antiblockierregelsystem nach den Ansprüchen 1 bis 9, <u>dadurch gekennzeichnet</u>, daß die Kurvendrucksteuerung während einer aktiven Regelung laufend den Vorderraddruckwert POein abspeichert, der zu einem Überbremsungszustand führt, und jeweils einen Referenzdruckpunkt POstop bildet, indem von dem zuletzt gespeicherten Blockierdruck P0ein ein schräglagewinkelabhängiger Betrag PDelta = f2 ($\Phi$) subtrahiert wird, wobei an den ABS-Regler dann ein Signal BOstop zum Anhalten des Vorderraddrucks PO gegeben wird, wenn dieser den Referenzdruckpunkt POstop in der Wiederbelastungsphase erreicht hat.

11. Antiblockierregelsystem nach Anspruch 10, <u>dadurch gekennzeichnet</u>, daß der ABS-Regler bei Empfang des Signals BOstop den Aufbau des Vorderradbremsdrucks PO nicht nur stoppt, sondern PO sogar um einen kleinen Betrag DPO reduziert, so daß im Falle einer konstanten Schräglage $\Phi$ der Druck PO abwechselnd um kleine Beträge reduziert und wieder erhöht wird, wodurch effektiv ein konstantes Druckniveau entsteht, und bei wachsen-der Schräglage $\Phi$ eine entsprechende Druckreduzierung auf ein tieferes Niveau erfolgt, während bei Verringerung der Schräglage $\Phi$ wieder der normale Druckaufbau der Wiederbelastungsphase gefahren wird.

12. Antiblockierregelsystem nach Anspruch 10, <u>dadurch gekennzeichnet</u>, daß zu definierten äquidistanten Zeitpunkten eine Überprüfung der erreichten Fahrzeugverzögerung AREF erfolgt, und daß eine Korrektur der Funktion PDelta = f2 ($\Phi$) dann durchgeführt wird, wenn AREF einen geforderten Minimalwert AREFmin unterschreitet, wobei die Korrektur so erfolgt, daß bei zu geringer Verzögerung AREF eine geringere Druckdifferenz PDelta eingestellt wird.

13. Antiblockierregelsystem nach Anspruch 10, <u>dadurch gekennzeichnet</u>, daß zu definierten äquidistanten Zeitpunkten nach Einsetzen des Druckhaltens eine Überprüfung der erreichten Fahrzeugverzögerung AREF erfolgt, und daß eine Korrektur der Funktion PDelta = f2 ($\Phi$) dann durchgeführt wird, wenn AREF einen geforderten Maximalwert AREFmax überschreitet, wobei die Korrektur so erfolgt, daß bei zu hoher Verzögerung AREF eine größere Druckdifferenz PDelta eingestellt wird.

14. Antiblockierregelsystem nach den Ansprüchen 1 bis 13, <u>dadurch gekennzeichnet</u>, daß die Hilfsschaltung(4) softwaremäßig auf dem ABS-Controller implementiert wird, und daß die Beschleunigungssensoren als kostengünstige Halbleitersensoren direkt auf der ABS-Steuerelektronik angebracht sind.

## Claims

1. An anti-look brake system for motorcycles, comprising wheel sensors (5, 6), a monitoring circuit (3) which recognises excessive braking states on the basis of the sensor signals and generates corresponding actuating signals, and a pressure modulator (1) which, by means of the actuating signals, adjusts the braking pressures on the two wheels of the vehicle, characterised in that for the purpose of recognising travel round corners and controlling the braking during cornering, the monitoring circuit (3) is supplemented by an auxiliary circuit (4) which, via two acceleration sensors (7) and (8), calculates the slant angle $\phi$ of the vehicle and, if the angle exceeds a critical threshold $\phi$ crit, delivers control signals which cause the anti-lock controller (3) to halt the braking-pressure increase on the front wheel before the expected predetermined locking pressure is reached.

2. An anti-lock brake system according to claim 1, characterised in that the acceleration sensors (7) and (8) are so disposed that one sensor determines the horizontal acceleration of the vehicle at right angles to the direction of travel and at right angles to the vertical axis of the vehicle whereas the second sensor measures the vertical acceleration of the vehicle at right angles thereto, and a low-pass filter system suppresses the high-frequency jitter components of the individual signals and, in order to prevent low-frequency interfering components caused by the ground, an additional requirement is that the horizontal signal must exceed at least half the value of the vertical signal if the slant angle $\phi$ calculated from the sensor signals is to count as valid.

3. An anti-lock brake system according to claim 1, characterised in that the acceleration sensors (7) and (8) at right angles to and in the direction of travel are inclined at 45° to the left and the right respectively of the vertical axis of the vehicle and disposed so that both sensors detect horizontal and vertical components of the vehicle acceleration, and a low-pass filter system suppresses high-frequency interference to the individual signals and, in order to eliminate low-frequency in-phase single components, an additional requirement is that the difference between the sensor signals must exceed a defined threshold value if the slant angle $\phi$ calculated from the sensor signals is to count as valid.

4. An anti-lock brake system according to claims 1 to 3, characterised in that outside the active anti-lock control system, the cornering pressure control presets a maximum permitted front-wheel pressure Pab in dependence on the measured and the calculated slant angle, wherein Pab takes a high value somewhat below the expected wheel-locking pressure at small angles $\phi$ and continuously decreases in accordance with a linear or exponential function with increasing $\phi$.

5. An anti-lock brake system according to claim 4, characterised in that the cornering pressure control actively limits the front-wheel pressure to the value Pab even before the anti-lock system has detected any tendency of the front wheel to lock, so that when braking begins during a slant attitude, an adequate lateral guiding force on the front wheel is guaranteed at least on ground which provides a good or average friction coefficient.

6. An anti-lock brake system according to claim 5, characterised in that the front-wheel pressure is limited to the value Pab in that the cornering pressure control, when using a plunger pressure modulator, preventively presets an engine propelling force, the force being adjusted so that the modulator automatically and mechanically separates the front-wheel brake cylinder from the main brake cylinder if the pressure thereof exceeds the value Pab, so that no high-speed monitoring mechanisms are required for limiting the pressure to Pab.

7. An anti-lock brake system according to claims 1 to 6, characterised in that at defined equidistant times after the pressure has been limited to Pab, a check is made on the deceleration AREF reached by the vehicle, and the function Pab = f1 ($\phi$) is corrected when AREF falls below a required minimum value AREFmin, the correction being such that a higher pressure Pab is set when the deceleration AREF decreases.

8. An anti-lock brake system according to claim 7, characterised in that the minimum deceleration AREFmin itself is calculated in dependence on the actual slant angle $\phi$ in accordance with a reciprocal function, so that the vehicle deceleration is forcibly reduced when the slant angle increases.

9. An anti-lock brake system according to claims 7 and 8, characterised in that the minimum deceleration AREFmin is increased by a constant factor when anti-lock control is operative on the rear wheel duct, since a higher deceleration level must be expected as a result of the strong rear-wheel braking.

10. An anti-lock brake system according to claims 1 to 9, characterised in that during active control, the cornering pressure control continuously stores that front-wheel pressure value POon which results in a state of excessive braking and plots a respective reference pressure point POstop by subtracting a slant-angle-dependent amount PDelta = f2 ($\phi$) from the last-stored locking pressure POon, a signal BOstop for holding the front-wheel pressure PO being delivered to the ABS controller when the front-wheel pressure has reached the reference pressure point POstop in the reloading phase.

**11.** An anti-lock brake system according to claim 10, characterised in that the anti-lock controller, on receipt of the signal BOstop, not only stops the build-up of the front-wheel brake pressure PO but also reduces PO by a small amount DPO, so that in the event of a constant slant angle $\phi$ the pressure PO is alternately reduced and increased by small amounts, resulting effectively in a constant pressure level, and when the slant angle $\phi$ increases a corresponding pressure reduction to a lower level is made, whereas when the slant angle $\phi$ decreases the pressure is built up again to the normal value for the re-loading phase.

**12.** An anti-lock brake system according to claim 10, characterised in that at defined equidistant times a check on the vehicle deceleration AREF is made, and the function PDelta = f2 ($\phi$) is corrected when AREF falls below a required minimum value AREFmin, the correction being such that a smaller pressure difference PDelta is set when the deceleration AREF is too small.

**13.** An anti-lock brake system according to claim 10, characterised in that at defined equidistant times after holding the pressure, a check on the vehicle deceleration AREF is made, and a correction of the function PDelta = f2 ($\phi$) is made when AREF exceeds a required maximum value AREFmax, the correction being such that a higher pressure difference PDelta is set when the deceleration AREF is too high.

**14.** An anti-lock brake system according to claims 1 to 13, characterised in that the software of the auxiliary circuit (4) is implemented in the anti-lock controller and the acceleration sensors are inexpensive semiconductor sensors mounted directly on the anti-lock control electronics.

### Revendications

**1.** Système de régulation antiblocage pour motocycles composé de capteurs de roue (5, 6), d'un circuit de surveillance (3) qui reconnaît les états de surfreinage à partir des signaux des capteurs et génère des signaux de commande appropriés ainsi qu'un modulateur de pression (1) qui règle les pressions de frein au niveau des roues du véhicule par les signaux de commande,
caractérisé en ce que
pour détecter la circulation en courbe et assurer un freinage régulé en courbe, qui puisse se dominer, le circuit de surveillance (3) est complété par un circuit auxiliaire (4) calculant par deux capteurs d'accélération (7, 8), l'angle d'inclinaison ($\Phi$) du véhicule et, dans le cas où cet angle dépasse un seuil critique ($\Phi$ crit), il demande au régulateur ABS (3) par des signaux de commande de maintenir la montée de la pression de frein sur la roue avant, avant d'atteindre une certaine pression de blocage prévue.

**2.** Système de régulation antiblocage selon la revendication 1,
caractérisé en ce que
les capteurs d'accélération (7, 8) sont montés pour qu'un capteur détecte l'accélération horizontale du véhicule, perpendiculairement à la direction de circulation et perpendiculairement à l'axe vertical du véhicule et que le second capteur mesure l'accélération verticale du véhicule perpendiculairement à la précédente, un filtre passe-bas éliminant les composantes d'instabilité à haute fréquence des signaux d'entrée et pour éviter des composantes d'incident à basse fréquence engendrées par le sol, on exige en outre que le signal horizontal ne doit pas dépasser au minimum la demi-valeur du signal vertical pour que l'angle d'inclinaison ($\Phi$) calculé à partir des signaux de capteurs soit pris comme valable.

**3.** Système de régulation antiblocage selon la revendication 1,
caractérisé en ce que
les capteurs d'accélération (7 et 8) sont montés perpendiculairement à la direction de déplacement et dans la direction de déplacement, en étant tournés chaque fois vers la gauche et vers la droite de 45° par rapport à l'axe vertical du véhicule pour que les deux capteurs détectent les composantes horizontales et verticales de l'accélération du véhicule, un filtre passe-bas supprimant les parasites haute fréquence des différents signaux et est en outre poussé à éliminer les composantes de signal basse fréquence, de même phase, pour que l'amplitude de la différence des signaux des capteurs ne dépasse pas un seuil déterminé pour que l'angle d'inclinaison ($\Phi$) calculé à partir des signaux des capteurs soit valable.

**4.** Système de régulation antiblocage selon l'une quelconque des revendications 1 à 3,
caractérisé en ce que
la commande de la pression en courbe à l'extérieur de la régulation ABS active prédétermine une pression de roue avant maximale autorisée Pab en fonction de l'angle d'inclinaison mesuré et calculé, Pab ayant pour les petits angles d'inclinaison ($\Phi$) une valeur plus élevée, sensiblement en dessous de la pression prévisible de blocage de roue et lorsque l'angle ($\Phi$) augmente, la valeur Pab diminue de manière linéaire ou de façon continue suivant une fonction exponentielle.

5. Système de régulation antiblocage selon la revendication 4,
caractérisé en ce que
la commande de la pression de courbe effectue une limitation active de la pression de roue avant à la valeur Pab même lorsque le système ABS n'a pas encore décelé de tendance au blocage de la roue avant, pour qu'en cas de freinage en position inclinée, au moins sur les sols ayant des coefficients d'adhérence bons et moyens, on réalise une force de guidage latérale suffisante au niveau de la roue avant.

6. Système de régulation antiblocage selon la revendication 5,
caractérisé en ce que
la limitation de la pression de la roue avant à la valeur Pab s'obtient en ce que dans le cas d'un modulateur de pression à plongeur, la commande de la pression en courbe effectue un réglage préventif d'une force de traction du moteur, cette force étant réglée pour que le moteur coupe le cylindre de frein de roue avant automatiquement, de manière mécanique par rapport au maître-cylindre de frein au cas où cette pression dépasse la valeur Pab de sorte que la limitation de pression de Pab ne nécessite pas de mécanismes de surveillance rapides.

7. Système de régulation antiblocage selon l'une quelconque des revendications 1 à 6,
caractérisé en ce que
à des instants équidistants, définis après la mise en route de la limitation de pression sur Pab, on contrôle la décélération obtenue du véhicule AREF et on exécute une correction de la fonction Pab = f1 ($\Phi$) si AREF passe en dessous d'une valeur minimale AREFmin, la correction se faisant alors pour régler une pression Pab plus élevée pour une décélération AREF plus faible.

8. Système de régulation antiblocage selon la revendication 7,
caractérisé en ce que
la décélération minimale AREFmin elle-même est calculée en fonction de l'inclinaison instantanée ($\Phi$) selon une fonction réciproque pour qu'avec un angle d'inclinaison croissant, on force une décélération plus faible pour le véhicule.

9. Système de régulation antiblocage selon les revendications 7 et 8,
caractérisé en ce que
la décélération minimale AREFmin est augmentée d'un coefficient constant si une régulation antiblocage est active sur le canal de la roue arrière, car du fait du fort freinage de la roue arrière, un plus grand niveau de décélération est prévisible.

10. Système de régulation antiblocage selon les revendications 1 à 9,
caractérisé en ce que
la commande de la pression en courbe enregistre pendant une régulation active, en continu, la valeur de la pression de roue avant POein qui conduit à un état de surfreinage et forme chaque fois un point de pression de référence POstop en ce que de la pression de blocage POein enregistrée en dernier lieu, on retranche une valeur PDelta = f2 ($\Phi$) dépendant de l'angle d'inclinaison et le régulateur ABS reçoit alors un signal BOstop pour maintenir la pression de roue avant PO si celle-ci atteint le point de pression de référence Postop dans la phase de remise en charge.

11. Système de régulation antiblocage selon la revendication 10,
caractérisé en ce que
à la réception du signal BOstop, le régulateur ABS non seulement n'arrête pas l'augmentation de la pression de frein de roue avant PO mais réduit même PO d'une petite valeur DPO , de sorte qu'en cas d'angle d'inclinaison constant $\Phi$, la pression PO soit alternativement réduite de petites valeurs et soit de nouveau augmentée, donnant effectivement un niveau de pression constant et lorsque l'angle d'inclinaison $\Phi$ augmente, une réduction correspondante de pression se fait à un niveau plus bas alors que pour une réduction de l'angle d'inclinaison $\Phi$ on repasse de nouveau à la montée en pression normale pour la phase de remise en charge.

12. Système de régulation antiblocage selon la revendication 10,
caractérisé en ce que
à des instants équidistants, définis, on contrôle la décélération obtenue du véhicule AREF et on effectue une correction de la fonction PDelta = f2 ($\Phi$) si AREF passe en dessous d'une valeur minimale demandée AREFmin, la correction se faisant pour que dans le cas d'une décélération faible AREF, il s'établisse une faible différence de pression PDelta.

13. Système de régulation antiblocage selon la revendication 10,
caractérisé en ce que
à des instants équidistants, définis après la mise en marche du maintien de pression, on contrôle la décélération obtenue du véhicule AREF et on effectue alors une correction de la fonction PDelta = f2 ($\Phi$) si AREF dépasse une valeur maximale demandée AREFmax, la correction se faisant pour qu'à une décélération plus élevée AREF, il s'établisse une plus grande différence de pression PDelta.

14. Système de régulation antiblocage selon l'une des revendications 1 à 13,
caractérisé en ce que
le circuit auxiliaire (4) est réalisé sous la forme d'un programme dans le contrôleur ABS et les capteurs d'accélération sont montés comme capteurs à semi-conducteur peu coûteux directement sur l'électronique de commande ABS.

Fig. 1

Fig. 2

$$s0 = \frac{VF - V0}{VF}$$

$aH = a \cdot \cos(\phi)$

$aV = a \cdot \sin(\phi)$

SH

a

$\phi$

SV

FZ

S

FR

G

vertikale Fahrzeugachse

A

$\otimes$ Fahrtrichtung

Fig. 3

a

$aL = a \cdot \cos(45° - \phi)$

SL

$aR = a \cdot \sin(\phi - 45°)$

$45°$  $45°$

SR

$\phi$

Fig. 3.a

Fig. 4

EP 0 603 612 B1

Fig. 5

Fig. 5.a

Fig. 5.b

Fig. 6

Fig. 6.a

Fig. 7

EP 0 603 612 B1

Fig. 7.a

Fig. 7.b

EP 0 603 612 B1

Fig. 7.c